# EUROPÄISCHE PATENTSCHRIFT

(11) **EP 2 512 776 B1**
(45) Veröffentlichungstag und Bekanntmachung des Hinweises auf die Patenterteilung: **21.02.2018**
(21) Anmeldenummer: 10798752.1
(22) Anmeldetag: 14.12.2010
(51) Int. Cl.: B29C 47/00, B29C 47/08, B29C 47/60, B29C 47/62, B29C 47/92, B29C 47/40

(54) **DATENBASIERTE MODELLE ZUR PROGNOSE UND OPTIMIERUNG VON SCHNECKENEXTRUDERN UND/ODER EXTRUSIONSVERFAHREN**
DATA-BASED MODELS FOR PREDICTING AND OPTIMIZING SCREW EXTRUDERS AND/OR EXTRUSION PROCESSES
MODÈLES BASÉS SUR DES DONNÉES POUR LE PRONOSTIC ET L'OPTIMISATION D'EXTRUDEUSES À VIS ET/OU DE PROCÉDÉS D'EXTRUSION

(30) Priorität: 18.12.2009 DE 102009059073
(43) Veröffentlichungstag der Anmeldung: 24.10.2012
(73) Patentinhaber: Covestro Deutschland AG, 51373 Leverkusen (DE)
(72) Erfinder: BIERDEL, Michael, 51373 Leverkusen (DE); MRZIGLOD, Thomas, 51467 Bergisch Gladbach (DE); GÖRLITZ, Linus, 51069 Köln (DE)
(74) Vertreter: Levpat
(86) Internationale Anmeldenummer: PCT/EP2010/069608
(87) Internationale Veröffentlichungsnummer: WO 2011/073181

(56) Entgegenhaltungen:
- EP-A2- 1 093 905
- "8 Strömungssimulation" In: KLEMENS KOHLGRÜBER: "Der gleichläufige Doppelschneckenextruder: Grundlagen, Technologie, Anwendungen", 1. Januar 2007 (2007-01-01), Hanser Verlag, XP009143864, Seiten 147-168, in der Anmeldung erwähnt das ganze Dokument
- SIMPSON T W ET AL: "Metamodels for computer-based engineering design: survey and recommendations", ENGINEERING WITH COMPUTERS, SPRINGER, BERLIN, DE, Bd. 17, Nr. 2, 1. Januar 2001 (2001-01-01) , Seiten 129-150, XP002402392, ISSN: 0177-0677

## Beschreibung

Die vorliegende Erfindung betrifft das technische Gebiet der Schneckenextruder sowie der Optimierung von Schneckenextrudern und Extrusionsverfahren. Gegenstand der vorliegenden Erfindung ist ein computerimplementiertes Verfahren zur Optimierung der Geometrie von Schneckenextrudern und zur Optimierung von Extrusionsverfahren. Gegenstand der vorliegenden Erfindung ist weiterhin ein Verfahren zur Herstellung von Schneckenextrudern. Gegenstand der vorliegenden Erfindung ist ferner ein Computersystem und ein Computerprogrammprodukt, mit denen die erfindungsgemäßen Verfahren ausgeführt werden können.
Die fortlaufende Optimierung von Prozessen und die Verbesserung von Produkteigenschaften ist eine der wesentlichen Triebkräfte für Forschung und Entwicklung in der Industrie. Hierbei zählt die unterstützende Verwendung mathematischer Methoden seit langem zum Stand der Technik.

Zunehmend werden Optimierungen mit Hilfe von Simulationen am Computer durchgeführt, um beispielsweise aufwändige Experimente mit teuren Rohstoffen und die Entsorgung von bei den Experimenten anfallenden Abfällen weitestgehend zu vermeiden.
Dies gilt insbesondere für die Optimierung von Schneckenextrudern. Schneckenextruder werden beispielsweise bei der Herstellung, Aufbereitung und Verarbeitung von Kunststoffen und Lebensmitteln eingesetzt. Dabei hat die dicht kämmende Doppelschneckenwelle mit gleichsinnig drehenden Wellen eine dominante Bedeutung unter den Extrudern. Ein wesentlicher Vorteil der dicht kämmenden Gleichdrallschnecke im Gegensatz zu den einwelligen Maschinen ist, dass sich die Gewinde bis auf die notwendigen Spiele exakt abschaben und damit gegenseitig reinigen. Schneckenextruder sind ausführlich in der folgenden Veröffentlichung [1] beschrieben: K. Kohlgrüber, Der gleichläufige Doppelschneckenextruder, Hanser Verlag, 2007. In dieser Veröffentlichung werden der Aufbau, die Funktion und der Betrieb von Zwei- und Mehrwellenextrudern ausführlich erläutert.
Wie leicht einzusehen ist, ist es aus wirtschaftlichen Gründen nicht sinnvoll, für eine Optimierung eines Schneckenextruders in einem Extrusionsverfahren eine Vielzahl von verschiedenen Schneckenextrudern herzustellen, um diese im Experiment auf ihre Güte zu testen, da die Herstellung von Schneckenextrudern mit hohen Kosten verbunden ist. Daher spielen Simulationen bei der Optimierung von Schneckenextrudern und Extrusionsverfahren eine wichtige Bedeutung.

In der Veröffentlichung [1] auf den Seiten 147 bis 168 wird auf Strömungssimulationen und ihre Rolle bei der Optimierung von Extrudern und Extrusionsverfahren näher eingegangen.

Ziel der Strömungssimulationen ist es, ein vertieftes Verständnis für die im Extruder ablaufenden Strömungsvorgänge zu erhalten, um zusammen mit wenigen Experimenten eine sichere und wirtschaftliche Extruderauslegung zu gewährleisten.

Simulationen sollen auch dazu dienen, Vorgänge zu erfassen, die sich im Experiment nur schwer oder gar nicht messen lassen. Im Bereich der Zweiwellenextruder können beispielsweise nur integrale Größen wie das Drehmoment der Wellen, der Druck und die Temperatur an der Austrittsdüse gemessen werden. Dagegen liefert eine Strömungssimulation lokale Informationen über Druck, Geschwindigkeit und Temperatur im gesamten Rechengebiet. Über die Berechnung von Gradienten erhält man zusätzlich Aussagen über Schergeschwindigkeiten und Wärmeübergangskoeffizienten. Im Rechenmodell lässt sich die Komplexität der Modelle schrittweise erhöhen. Dies ermöglicht Aussagen, welche Prozessgrößen für die Produktqualität entscheidend sind. Durch Variation der Betriebszustände lassen sich Extrusionsverfahren optimieren.

Nachteilig dabei ist, dass in der Regel für jede Fragestellung ein eigenes Rechenmodell generiert werden muss. Darüber hinaus sind bereits durchgeführte Simulationen schwierig oder gar nicht für verwandte oder andere Fragenstellungen wiederverwertbar.

Dies wird auch anhand der in [1] auf den Seiten 151 bis 165 aufgeführten Beispiele für Simulationsrechnungen in Schneckenextrudern deutlich. Jede Fragestellung wird in einem dreistufigen Verfahren angegangen. Im ersten Schritt (Pre-Processing) wird die Geometrie der Schnecken festgelegt und in eine Form überführt, die Strömungssimulationen erlaubt (Gittergenerierung). Im zweiten Schritt (Strömungssimulation) werden nach Festlegung eines Strömungsmodells und Eingabe von Stoff- und Betriebsdaten durch Lösen entsprechender Differentialgleichungen Strömungsfelder berechnet. Im dritten Schritt (Post-Processing) erfolgt eine umfassende Analyse der berechneten Strömungsfelder in Hinblick auf die vorausgegangene Fragestellung. Bei einer neuen oder veränderten Fragestellung müssen alle Schritte erneut durchlaufen und die zeitaufwändigen Berechnungen erneut durchgeführt werden. Die Ergebnisse liegen nicht in einer Form vor, wie sie für ähnliche Fragestellungen wiederverwendet werden können. Es ist kein System vorhanden, das einmal simulierte Prozesse speichert und in einer Form vorhält, in der sie zu einem späteren Zeit verwendet werden können, um vergleichbare Fragestellungen mit geringerem Rechenaufwand anzugehen.

Hinzu kommt gerade bei der Optimierung von Schneckenextrudern noch das Problem, dass die Parameter, die einen Prozess definieren, nicht frei wählbar sind, und dass die Konstruktion von paarweise exakt abschabenden Schneckenelementen ein nicht triviales Problem darstellt. Dies soll kurz näher erläutert werden. Laut der Veröffentlichung [1] (Seite 151) ist die Geometrie eines Gewindeelements des Typs Erdmenger durch die folgenden 6 Angaben eindeutig definiert:
Gangzahl, Gehäusedurchmesser, Achsabstand, Spiel zwischen Schnecke und Gehäuse, Spiel zwischen benachbarten Schnecken und Steigung. Angenommen es wurde ein Simulation mit einem Parametersatz wie in [1] auf Seite 151 angegeben durchgeführt. Die Gangzahl betrug 2 und die Anfangstemperatur 300°C. Dann ist es einfach möglich, die Temperatur zu Beginn einer Simulation beispielsweise auf 310°C oder 320°C zu setzen und eine neue Simulation durchzuführen. Es ist aber nicht so einfach, die Gangzahl von 2 auf 3 oder 4 zu erhöhen. Wie sehen Paare von Schneckenelementen aus, wenn man ausgehend von einem Geometrieparametersatz die Gangzahl erhöht? Ist es überhaupt zulässig, die Gangzahl unter Beibehaltung der übrigen Parameter zu variieren? Ergeben sich durch die Änderung eines Parameters (z.B. Gangzahl) weiterhin Schneckenelemente mit paarweise exakt abschabenden Profilen?

Das Problem bei Schneckenelementen liegt darin, dass nach dem Stand der Technik keine allgemeine Konstruktionsvorschrift für die Erzeugung beliebiger Schneckenprofile, die sich paarweise exakt abschaben, bekannt ist. Es gibt wenige Typen von Schneckenelementen, bei denen es eine Konstruktionsvorschrift gibt. Es ist z.B. bekannt (siehe [1] Seiten 96 bis 98), dass sich das selbstreinigende Erdmenger-Schneckenprofil aus Kreisbögen aufbauen lässt. Eine weiteres Verfahren zur Erzeugung von Erdmenger-Schneckenprofilen findet sich in der Veröffentlichung [2] von Booy: "Geometry of fully wiped twin-screw equipment", Polymer Engineering and Science 18 (1978) 12, Seiten 973 - 984.

In den genannten Veröffentlichungen wird zur Erzeugung von Schneckenprofilen die kinematische Besonderheit ausgenutzt, dass die gleichsinnige Rotation zweier Wellen um ihre ortsfesten Achsen kinematisch gleichwertig mit der "Schiebung ohne Rotation" einer Welle um die andere, dann feststehende Welle ist. Diese Besonderheit kann dazu verwendet werden, schrittweise Schneckenprofile zu erzeugen. Die erste Schnecke (die "erzeugte") steht bei der Betrachtung still und die zweite Schnecke (die "erzeugende") wird um die erste translatorisch auf einem Kreisbogen verschoben. Man kann nun einen Teil des Profils auf der zweiten Schnecke vorgeben und untersuchen, welches Profil auf der ersten Schnecke dadurch erzeugt wird. Die erzeugte Schnecke wird durch die erzeugende gewissermaßen "herausgeschnitten". In [1] ist jedoch kein Verfahren angegeben, wie der Teil auf der zweiten Schnecke, der vorgegeben wird, selbst zu erzeugen ist. In [2] ist ein möglicher Ansatz beschrieben, wie der Profilabschnitt, von dem man ausgehen kann und aus dem das restliche Profil erzeugt wird, generiert werden kann. Dieser Ansatz ist jedoch mathematisch sehr aufwändig und vor allem nicht allgemeingültig, das heißt es lassen sich keine beliebigen Profile für Schneckenelemente erzeugen.

Zusammenfassend lässt sich festhalten, dass Simulationsrechnungen für die Optimierung von Schneckenextrudern und Extrusionsverfahren eingesetzt werden können. Allerdings ist die im Stand der Technik beschriebene Vorgehensweise wenig effizient, da für jede Fragestellung eine neue zeitaufwändige Simulation durchgeführt werden muss. Im Bereich der Extruderschnecken gibt es das zusätzliche Problem, dass es keine allgemeine Konstruktionsvorschrift für paarweise exakt abschabende Schneckenelemente gibt, so dass eine Variation der Werte für die Parameter, die eine Extruderschnecke definieren, nicht ohne Weiteres möglich ist.

Es stellt sich demnach ausgehend vom Stand der Technik die Aufgabe, ein effizienteres Verfahren zur Optimierung von Schneckenextrudern und/oder Extrusionsverfahren bereitzustellen. Das gesuchte Verfahren soll insbesondere dazu geeignet sein, auch optimierte Geometrien für Extruder zu identifizieren. Insofern besteht die Aufgabe auch darin, ein Verfahren zur Erzeugung von optimierten Schneckenextrudern bereitzustellen.

Erfindungsgemäß wird diese Aufgabe durch Entkopplung der Simulationsrechnungen von der konkreten Optimierung gelöst. Erfindungsgemäß wird zunächst eine Vielzahl von Simulationsrechnungen in einem vorher definierten Parameterraum durchgeführt. Die Ergebnisse der Simulationsrechnungen werden genutzt, um ein datenbasiertes Modell für diesen Parameterraum zu generieren. Das datenbasierte Modell beschreibt den definierten Parameterraum und liefert zu allen interessierenden Wertekombinationen für die hinterlegten Parameter Prognosewerte.

Damit sind die Ergebnisse der Simulationsrechnungen für eine Vielzahl von unterschiedlichen Fragestellungen verfügbar und es müssen keine weiteren Simulationsrechnungen durchgeführt werden, um eine konkrete Fragestellung zu beantworten. Anhand des datenbasierten Modells können Vorhersagen für konkrete Fragestellungen in einer sehr viel kürzeren Zeit getroffen werden als für die Durchführung einer Simulationsrechnung benötigt werden würde. Das datenbasierte Modell kann weiterhin zur Optimierung von Parameterwerten für Extruder und/oder Extrusionsverfahren verwendet werden.

Erfindungsgemäß wird die zeitaufwändige Einzelsimulation zu einer konkreten Fragestellung somit durch ein Gesamtmodell ersetzt, das nur ein einziges Mal erzeugt werden muss. Der hohe Rechenaufwand fällt einmalig an und kann weitestgehend automatisiert werden. Entscheidend ist, dass die Ergebnisse der Simulationen in einer Form gespeichert werden - und zwar in der Form des datenbasierten Modells - in der sie für spätere Fragestellungen verfügbar sind. Die einzelnen Simulationsrechnungen haben aufgrund der Eigenart des datenbasierten Modells nicht nur einen Nutzen für die jeweilige Einzelsimulation sondern es wird durch das datenbasierte Modell vielmehr ein Werkzeug geschaffen, mit dem auch Ergebnisse für Wertekombinationen, die nicht in eine Simulationsrechnung eingeflossen sind, durch Interpolation ermittelt werden können.

Bei einer vorliegenden Fragestellung werden entsprechende Werte in das datenbasierte Modell eingegeben und es können im Vergleich zur Einzelsimulation sehr schnell Prognosewerte für die Ergebnisse ermittelt werden. Es ist nicht mehr nötig, für eine Fragestellung ein entsprechendes Simulationsmodell aufzubauen und die entsprechenden Simulationsrechnungen durchzuführen.

Ein erster Gegenstand der vorliegenden Erfindung ist damit computerimplementiertes Verfahren zur Erstellung eines Prognose-Werkzeugs für Schneckenextruder und/oder Extrusionsverfahren, das die Merkmale des Anspruch 1 ausweist.

In Schritt (a) des erfindungsgemäßen Verfahrens wird ein Parameterraum festgelegt. Dabei werden zunächst die Parameter festgelegt, die für die Simulation von Extrusionsverfahren benötigt werden. Drei Gruppen von Parametersätzen lassen sich unterscheiden: Parameter zum Beschreiben der Geometrie der Schneckenextruder, Parameter zum Beschreiben des Extrusionsguts und Verfahrensparameter.

Wie oben bereits beschrieben, ist die Beschreibung der Geometrie von Schneckenextrudern ein nicht triviales Problem, da es keine allgemeine Konstruktionsvorschrift für paarweise exakt abschabende Schneckenextruder gibt und damit auch keine allgemein bekannten Parameter existieren, die alle möglichen paarweise exakt abschabenden Schneckenextruder eindeutig beschreiben.

Überraschend wurden jedoch die Grundprinzipien gefunden, die der Geometrie von paarweise exakt abschabenden Schneckenprofilen zugrunde liegen. Diese sind im Anhang 1 dargestellt. Anhang 1 ist Bestandteil der vorliegenden Anmeldung.

Diese Grundprinzipien erlauben es, Parameter zu definieren, die paarweise exakt abschabende Schneckenextruder eindeutig beschreiben und Konstruktionsvorschriften für paarweise exakt abschabende Schneckenextruder zu erstellen.

Mittels dieser Grundprinzipien lassen sich die Querschnittsprofile (Profile nach Schnitt senkrecht zur Drehachse) eines Paares von exakt abschabenden Schneckenextrudern durch Kreisbögen beschreiben. Damit sind die Profile durch Angabe der Mittelpunkte, Radien und Winkel der sie bildenden Kreisbögen exakt definiert. Je nach Fortsetzung der Profile in die dritte Dimension in Richtung der Drehachsen zur Erzeugung von Misch-, Knet-, Förder- oder Übergangselementen lassen sich die weiteren Parameter zur Beschreibung der Geometrie paarweise exakt abschabender Schneckenextruder festlegen, wie z.B. die Steigung bei einem Gewindeelement. Weiterhin kann die Angabe der Spiele (Spiel zwischen Schnecke und Gehäuse, Spiel zwischen den Schnecken) erforderlich sein.

Damit sind die Geometrien der Schnecken exakt definiert. Die Schnecken müssen jedoch nicht zwangsläufig durch die oben beschriebenen Koordinaten und Größen von Kreisbögen als Parameter definiert werden, sondern es können beispielsweise auch abgeleitete Größen zur ihrer Beschreibung verwendet werden. Vorzugsweise werden solche abgeleiteten Größen als Beschreibungsgrößen (Parameter) verwendet, von denen ein realer physikalischer Einfluss in der Realität zu erwarten ist. Zum Beispiel kann als möglicher Parameter die Breite des Kamms angegeben werden, mit der die Schnecke das Gehäuse abschabt. Die Breite des Kamms hat Einfluss auf den Eintrag von Energie in das Fördergut und ist daher eine wichtige Größe zur Charakterisierung eines Schneckenextruders.

Parameter, die das Fördergut charakterisieren, sind beispielsweise die Dichte, die Wärmekapazität, die Wärmeleitfähigkeit, die Viskosität und andere. Diese Parameter für das Extrusionsgut sind häufig von Werten für die Verfahrensparameter abhängig. Beispielsweise ist die Viskosität abhängig von der Verarbeitungstemperatur.

Parameter, die das Verfahren charakterisieren (Verfahrensparameter), sind beispielsweise Druck, Temperatur, Drehzahl der Schneckenextruder, Drehmoment der Wellen und andere.

Nachdem die Parameter selbst festgelegt sind, erfolgt die Festlegung des Parameterraumes. Das heißt, es werden die Wertebereiche für die jeweiligen Parameter festgelegt, die den Simulationen zugrunde gelegt werden sollen. Der Wertebereich für den Parameter Anfangstemperatur bei der Extrusion könnte beispielsweise auf 0°C bis 500°C festgelegt werden.

Ist zu erwarten oder zeigt sich, dass verschiedene Fördergüter und/oder verschiedene Typen von Schneckenextrudern vollkommen unterschiedliche Verhalten in den Simulationen zeigen, kann es sinnvoll sein, verschiedene datenbasierte Modelle für verschiedene Typen von Fördergütern und/oder verschiedene Typen von Schneckenextrudern zu erzeugen. Diese verschiedenen Modelle können bei Bedarf später in einem einzigen Modell zusammengefasst werden.

Es ist beispielsweise sinnvoll, bei den Fördergütern zwischen solchen, die Newtonsches Fließverhalten zeigen, und solchen, die nicht-Newtonsch sind, zu unterscheiden und hierfür separate Simulationen durchzuführen und separate Modelle zu erzeugen.

Weiterhin ist es sinnvoll, auch Typen von Schneckenextrudern separat zu betrachten. Ein Typ von Schneckenextrudern könnte beispielsweise durch zweigängige Gewindeelemente mit einem Erdmengerprofil (siehe [1] Seiten 151 bis 168) gebildet werden, während ein anderer Typ beispielsweise durch eingängige Gewindeelemente mit reduziertem Kammwinkel wie sie in PCT/EP2009/004251 beschrieben sind, gebildet werden könnte.

In Schritt (b) des erfindungsgemäßen Verfahrens erfolgt eine Auswahl von repräsentativen Wertekombinationen innerhalb des Parameterraums. Unter repräsentativen Wertekombinationen werden Wertekombinationen verstanden, die den Parameterraum möglichst umfangreich beschreiben und möglichst verschiedene Bereiche des Parameterraumes abdecken. Ziel ist es, Wertekombinationen zu finden, die den Parameterraum so gut beschreiben, dass das datenbasierte Modell, in das diese Wertekombinationen (zusammen mit den Ergebnissen der Simulationsrechnungen) einfließen, Vorhersagen auch für andere Werte treffen kann.

Hierzu werden zweckmäßigerweise die dem Fachmann aus der Versuchsplanung bekannten Methoden eingesetzt, wie beispielsweise Versuchsplanungsmethoden auf Basis statistischer Versuchsplanung wie Placket-Burmann Versuchspläne, zentral-zusammengesetzte Pläne (central composite), Box-Behnken Versuchspläne, D-optimal Pläne, Balancierte Blockpläne, Verfahren nach Shainin oder Taguchi und andere. Verfahren zur Versuchsplanung sind u.a. beschrieben in: Hans Bendemer, Optimale Versuchsplanung, Reihe Deutsche Taschenbücher, DTB, Band 23 (ISBN 3-87144-278-X) oder Wilhelm Kleppmann, Taschenbuch Versuchsplanung, Produkte und Prozesse optimieren, 2. Aufl. (ISBN 3-446-21615-4). Insbesondere sei hier auch auf die in WO2003/075169A beschriebene Methode hingewiesen.

Es ist möglich, dass sich zu einem späteren Zeitpunkt des erfindungsgemäßen Verfahrens zeigt, dass die ausgewählten Wertekombinationen den Parameterraum nicht ausreichend repräsentativ beschreiben (siehe Schritt (d)). In diesem Fall kann es erforderlich sein, andere und/oder weitere Wertekombinationen auszuwählen (siehe Schritt (e)).

In Schritt (c) des erfindungsgemäßen Verfahrens erfolgen Simulationsrechnungen für die ausgewählten Wertekombinationen. Es werden verschiedene ausgewählte Szenarien berechnet und simuliert, wie sich verschiedene Schneckenextruder unter verschiedenen Verfahrensparametern und/oder ggf. unter Verwendung verschiedener Materialien (Extrusionsgut) verhalten.

Für solche Simulationen muss die dreidimensionale Schneckenkontur in einer Form vorliegen, die mathematische Berechnungen mittels eines Computers ermöglicht. Die virtuelle Repräsentation einer Schnecke in einem Computer erfolgt vorteilhaft wie in [1] auf den Seiten 149 bis 150 beschrieben in Form eines so genannten Rechengitters.
Vorzugsweise erfolgt die Konstruktion von paarweise exakt abschabenden Schnecken im Computer zunächst durch Festlegung ihrer Querschnittsprofile (im Folgenden auch kurz als Profile bezeichnet), d.h. durch Festlegung des erzeugenden und erzeugten Schneckenprofils. Die Profile werden ihrerseits vorzugsweise durch die Angabe der Mittelpunkte, Radien und Winkel der Kreisbögen festgelegt. Hierbei finden die im Anhang 1 aufgeführten Grundprinzipien und die in Anhang 1 aufgeführte Konstruktionsvorschrift oder eine hiervon abgeleitete Konstruktionsvorschrift (siehe PCT/EP2009/003549) Anwendung.

Ausgehend von den zweidimensionalen Profilen erfolgt dann die Fortsetzung des Profils in die dritte Dimension, in Richtung der Drehachse. Ein Modell eines Förderelements wird beispielsweise dadurch erzeugt, dass das Profil schraubenförmig in Achsrichtung verdreht wird. Ein Modell eines Knetelements wird beispielsweise erzeugt, indem das Profil abschnittsweise in Achsrichtung fortgesetzt wird, wobei die Abschnitte gegeneinander versetzt werden, so dass gegeneinander versetzte Scheiben entstehen.

Die Repräsentation der Schneckenextruder im Computer erfolgt in Form von Rechengittern. Hierbei wird das Volumen zwischen der Innenoberfläche des Gehäuses und den Oberflächen eines Schneckenextruders mit einem Rechengitter vernetzt, welches aus Polyedern wie zum Beispiel Tetraedern oder Hexaedern besteht (siehe z.B. [1]).
Das Rechengitter sowie die Stoffdaten des Extrusionsguts und die Betriebsdaten der Schneckenmaschine, in der die Schneckenextruder und das Extrusionsguts eingesetzt werden, werden in einem Programm zur Strömungssimulation eingegeben und die Strömungsverhältnisse simuliert (siehe z.B. [1]).

Die Ergebnisse der Strömungssimulationen liegen beispielsweise in Form von Strömungs-, Druck- und/oder Temperaturfeldern vor (siehe [1] Seiten 147 bis 168). Aus den Strömungssimulationen lassen sich, wie in [1] auf den genannten Seiten beschrieben, Förder- und Leistungscharakteristiken ermitteln. Aus den Simulationsergebnissen werden erfindungsgemäß Ergebniskennzahlen ermittelt, die sich mit den jeweilig verwendeten Wertekombinationen in Beziehung setzen lassen. Vorzugsweise werden aus den Förder- und Leistungscharakteristiken (siehe [1] Seite 158) Achsabschnitte und/oder Steigungen der Geraden (Druckdifferenz als Funktion des Volumenstroms, Leistung als Funktion des Volumenstroms) berechnet und diese als Ergebniskennzahlen verwendet.

Nachdem die Simulationsrechnungen durchgeführt und Ergebniskennzahlen ermittelt worden sind, erfolgt die Erstellung eines datenbasierten Modells (Schritt d). Ein solches Modell soll Wertekombinationen von Eingangsgrößen (Inputparameter) mit den entsprechenden Ergebniskennzahlen (Outputparameter) in Beziehung setzen. Das Modell wird als datenbasiertes Modell bezeichnet, weil das Modell diese Beziehungen auf Basis der vorliegenden Daten (Wertekombinationen, Ergebniskennzahlen) vornimmt, ohne dass reale physikalische Beziehungen zwischen den Daten bekannt sein müssen und/oder einfließen müssen.

Die Erzeugung datenbasierter Modelle aus vorliegenden Eingangs- und Ausgangsgrößen zählt zum allgemeinen Stand der Technik. Bekannte datenbasierte Modelle sind beispielsweise: Lineare und Nichtlineare Regressionsmodelle (siehe z.B. Hastie, Tibshirani, Friedman: The Elements ofStatistical Learning, Springer, 2001), Lineare Approximationsverfahren, Künstliche Neuronale Netze (z.B. Perzeptron, rekurrente Netze) (siehe z.B. Andreas Zell: Simulation neuronaler Netze. ISBN 3-486-24350-0 oder Raul Rojas: Theorie der Neuronalen Netze. ISBN 3-540-56353-9 oder MacKay, David J. C. (September 2003). Information Theory, Inference and Learning Algorithms. Cambridge: Cambridge University Press. ISBN 0-521-64298-1), Supportvektor Maschinen (siehe z.B. B. Schölkopf, A. Smola: Learning with Kernels, MIT Press, 2002), Hybrid Modelle (siehe z.B. A.A. Schuppert: Extrapolability ofstructured hybrid models: a key to optimization ofcomplex processes, in: B. Fiedler, K. Gröger, J. Sprekels (Eds.), Proceedings of EquaDiff '99, 2000, pp. 1135-1151 oder G. Mogk, T. Mrziglod, A. Schuppert: Application ofhybrid models in chemical industry, in: J. Grievink, J. van Schijndel (Eds.), Proceedings of European Symposium on Computer Aided Process Engineering, vol. 12, The Hague, The Netherlands, May 26-29, 2002, Elsevier Science B.V., pp. 931-936 oder EP-A1253491).

Vorzugsweise wird ein Hybridmodell verwendet.

Alle Modelltypen enthalten Parameter, die mit Hilfe der erzeugten Simulationsdaten so bestimmt werden (Training), dass das Input-Output-Verhalten des Modells in einem festgelegten Sinn optimal ist.
Für die verschiedenen Modelltypen spezifische Trainingsverfahren sind in der genannten Literatur zu finden. Ein effizientes Trainingsverfahren für zweistufige Perzeptrons ist z.B. beschrieben in F. Bärmann, F. Biegler-König, Neural Networks 1992, 5(1), 139-144.

Weiterhin erfolgt in Schritt (d) die Bewertung der Modellgüte. Dies kann beispielsweise mit Hilfe von Validierungsdaten durch Überprüfung der Prognoseverlässlichkeit erfolgen (siehe z.B. Chiles, J.-P. and P. Delfiner (1999) Geostatistics, Modeling Spatial Uncertainty, Wiley Series in Probability and statistics). Vorzugsweise erfolgt ein Plausibilitätsabgleich der Abhängigkeiten in verschiedenen Bereichen des Parameterraums unter Anwendung von Vorwissen.

Für die Bewertung der Modellgüte werden damit vorzugsweise Wertekombinationen verwendet, für die Simulationsrechnungen durchgeführt wurden, die aber nicht zur Erzeugung des datenbasierten Modells verwendet wurden (Validierungsdaten). Es wird untersucht, inwieweit das datenbasierte Modell auch die Ergebnisse von "unbekannten" Szenarien vorhersagen kann. Hierbei bestimmt der jeweilige Anwendungszweck die geforderte Modellgüte. Ein Maß für die Modellgüte ist beispielsweise die maximale Abweichung zwischen berechnetem Simulationsergebnis und mittels Modell vorhergesagtem Modellergebnis. Bei der Modellierung von Extrusionsverfahren hat sich eine maximale Abweichung von 5%, vorzugsweise von 2% als ausreichende Modellgüte herausgestellt.

Ist die Modellgüte nicht ausreichend, so wird erfindungsgemäß der Parameterraum neu festgelegt und/oder andere und/oder weitere Wertekombinationen ausgewählt, die den Parameterraum beschreiben. Erfindungsgemäß erfolgt somit in Schritt (e) gegebenenfalls die Wiederholung eines oder mehrerer der Schritte (a) bis (e), bis mit Hilfe des datenbasierten Modells die Ergebniskennzahlen hinreichend genau berechnet werden können.

Das Ergebnis des beschriebenen erfindungsgemäßen Verfahrens ist ein optimiertes datenbasiertes Modell, das als Prognose-Werkzeug verwendet werden kann.

Das Prognose-Werkzeug kann als Programmcode auf einem maschinenlesbaren Datenträger wie z.B. einer Diskette, einer CD, einer DVD, einer Festplatte, einem Memory-Stick oder dergleichen vorliegen. Das auf dem maschinenlesbaren Datenträger befindliche Prognose-Werkzeug kann in einen Arbeitsspeicher eines Computers gelesen werden. Mittels des Computers und der am Computer angeschlossenen Ein- und Ausgabegeräte kann ein Benutzer das Prognose-Werkzeug bedienen, d.h. Werte in das datenbasierte Modell eingeben und Ergebniskennzahlen berechnen. Vorzugsweise wird der Benutzer hierbei durch eine grafische Benutzeroberfläche unterstützt. Ebenso ist es möglich, das Prognose-Werkzeug als Mikrochip zu realisieren, das mit einer geeigneten Peripherie (Eingabe- und Ausgabegeräte) analog zu dem im Computer eingelesenen Programm bedient wird.

Gegenstand der vorliegenden Erfindung ist auch ein Prognose-Werkzeug für Schneckenextruder und/oder Extrusionsverfahren, das gemäß dem beschriebenen Verfahren zur Erzeugung des Prognose-Werkzeugs erzeugt worden ist.

Das Prognose-Werkzeug kann beispielsweise verwendet werden, um das Verhalten von neuen oder modifizierten Schneckenextrudern in Extrusionsverfahren zu berechnen. Das Prognose-Werkzeug kann beispielsweise verwendet werden, um die Auswirkung von veränderten Werten der Verfahrensparameter auf das Extrusionsgut zu ermitteln.

Ein weiterer Gegenstand der vorliegenden Erfindung ist damit ein Verfahren zur Vorhersage des Verhaltens von Schneckenextrudern bei der Extrusion eines Extrusionsguts. Dieses Verfahren umfasst mindestens die folgenden Schritte:
(I) Erstellung eines datenbasierten Modells als Prognose-Werkzeug,
(II) Eingabe von kennzeichnenden Werten für Schneckenextruder, Extrusionsverfahren und Extrusionsgut in das datenbasierte Modell,
(III) Berechnung von Ergebniskennzahlen mittels des datenbasierten Modells,
(IV) Ausgabe eines Ergebnisses.

Die Schritte (I) bis (IV) des erfindungsgemäßen Verfahrens werden vorzugsweise in der angegebenen Reihenfolge durchgeführt.

Die Erstellung des datenbasierten Modells in Schritt (I) erfolgt wie oben zum Verfahren zur Erstellung eines Prognose-Werkzeugs für Schneckenextruder und/oder Extrusionsverfahren beschrieben.

In Schritt (II) erfolgt die Eingabe der Werte, die dasjenige Szenario beschreiben, für das eine Vorhersage erzielt werden soll. Dies sind die Werte für die Geometrie der Schneckenextruder, die Werte, die das Extrusionsgut charakterisieren und die Werte, die das Extrusionsverfahren festlegen.

Die Eingabe erfolgt üblicherweise mit einer Maus und/oder einer Tastatur an einem Computersystem, auf dem das Prognose-Werkzeug als Software-Programm ausgeführt werden kann.

In Schritt (III) erfolgt die Berechnung von Ergebniskennzahlen mittels des datenbasierten Modells. Diese Berechnung erfolgt in der Regel in einem Bruchteil der Zeit, die für eine einzige Simulation notwendig ist.

In Schritt (IV) erfolgt schließlich die Ausgabe von Ergebnissen. Ergebnisse können die berechneten Ergebniskennzahlen selbst sein. Diese können als Werte auf einem Computerbildschirm angezeigt werden. Es können auch Werte oder Größen angezeigt werden, die von den Ergebniskennzahlen abgeleitet sind. Vorzugsweise erfolgt die Darstellung von Ergebnissen durch Grafiken und/oder durch farbliche Kennzeichnungen.

Neben der reinen Vorhersage des Verhaltens von Schneckenextrudern in Extrusionsverfahren ist auch eine Optimierung von Schneckenextrudern und/oder Extrusionsverfahren mittels des Prognose-Werkzeugs möglich. Ein weiterer Gegenstand der vorliegenden Erfindung ist damit ein Verfahren zur Optimierung der Geometrie von Schneckenextrudern und/oder Extrusionsverfahren.

Dieses Verfahren umfasst mindestens die folgenden Schritte:
(A) Erstellung eines datenbasierten Modells als Prognose-Werkzeug,
(B) Festlegung eines Zielprofils für die Schneckenextruder und/oder das Extrusionsverfahren,
(C) Identifizierung derjenigen Wertekombinationen, die das festgelegte Zielprofil erfüllen und/oder dem Zielprofil am nächsten kommen,
(D) Ausgabe der in Schritt (C) ermittelten Wertekombinationen.

Die Schritte (A) bis (D) des erfindungsgemäßen Verfahrens werden vorzugsweise in der angegebenen Reihenfolge durchgeführt.

Die Erstellung des datenbasierten Modells in Schritt (A) erfolgt wie oben zum Verfahren zur Erstellung eines Prognose-Werkzeugs für Schneckenextruder und/oder Extrusionsverfahren beschrieben.

In Schritt (B) wird das Zielprofil für die Schneckenextruder und/oder das Extrusionsverfahren festgelegt. Die Festlegung des Zielprofils umfasst die Aufstellung von Regeln für alle Ergebniskennzahlen (Output), die durch die gesuchten Wertekombinationen (Input) erfüllt sein sollen. Es ist beispielsweise möglich, eine maximale Temperaturerhöhung des Extrusionsguts festzulegen oder einen minimalen Druckaufbau, der erforderlich ist, das Extrusionsgut durch den Extruder zu fördern.

Die Suche nach denjenigen Wertekombinationen, die das vorgegebene Zielprofil erfüllen oder diesem am nächsten kommen, erfolgt in Schritt (C) unter Verwendung des datenbasierten Modells. Mit Hilfe des datenbasierten Modells können für eine Vielzahl von Wertekombinationen (Inputparameter) die Ergebniskennzahlen (Outputparameter) in sehr kurzer Zeit berechnet werden, so dass eine gezielte Variation der Werte für die Inputparameter und Vergleich der Werte für die Outputparameter mit dem Zielprofil zu den gesuchten Inputparametern führt, die das Zielprofil erfüllen oder diesem am nächsten kommen. Diese Suche nach den "optimalen" Wertekombinationen zur Erzielung eines vorgegebenen Profils kann durch bekannte Optimierungsverfahren wie beispielsweise Monte-Carlo-Methoden, Evolutionäre Optimierung (genetische Algorithmen), Simulated Annealing oder anderen unterstützt werden. Eine Übersicht über Optimierungsverfahren gibt z.B. das Buch von M. Berthold et al., Intelligent Data Analysis, Springer, Heidelberg 1999.

In Schritt (D) erfolgt schließlich die Ausgabe der Wertekombinationen, die das festgelegte Zielprofil erfüllen und/oder diesem am nächsten kommen. Vorzugsweise erfolgt auch die Ausgabe der berechneten Ergebnisparameter und die Abweichung der berechneten Ergebnisparameter von dem Zielprofil. Die Ausgabe kann in Form von Zahlen und/oder Grafiken an einem Computerbildschirm oder einem Drucker erfolgen.

Das Prognose-Werkzeug kann auch bei der Erzeugung von neuen Schneckenextrudern eingesetzt werden. Ein weiterer Gegenstand der vorliegenden Erfindung ist daher ein Verfahren zur Herstellung von Schneckenextrudern, mindestens umfassend die folgenden Schritte:
(i) Erstellung eines datenbasierten Modells als Prognose-Werkzeug,
(ii) Festlegung eines Zielprofils für die Schneckenextruder und/oder das Extrusionsverfahren,
(iii) Identifizierung derjenigen Wertekombinationen für die Schneckenextruder, die das festgelegte Zielprofil erfüllen und/oder dem Zielprofil am nächsten kommen,
(iv) Ausgabe und/oder Speicherung der in Schritt (iii) ermittelten Wertekombinationen,
(v) Erstellung von Schneckenextrudern auf Basis der in Schritt (iii) ermittelten Wertekombinationen.

Die Schritte (i) bis (v) des erfindungsgemäßen Verfahrens werden vorzugsweise in der angegebenen Reihenfolge durchgeführt.

Die Schritte (i) bis (iii) entsprechen den Schritten (A) bis (C) des Verfahrens zur Optimierung der Geometrie von Schneckenextrudern und/oder Extrusionsverfahren. Es wird demnach eine für einen vorgegebenen Anwendungsfall optimierte Geometrie der Schneckenextruder ermittelt. Diese am Computer berechnete Geometrie wird dann zur Erzeugung eines realen Schneckenextruders (Schritt (v)) verwendet. Vorzugsweise werden die Geometriedaten der Schneckenextruder in ein Format überführt, das direkt einer CNC-Werkzeugmaschine (CNC = Computerized Numerical Control) zur Erzeugung der Schneckenelemente zugeführt werden kann. Solche Formate sind dem Fachmann bekannt.

Nachdem die Geometrien auf die beschriebene Weise erzeugt worden sind, können die Schneckenextruder z.B. mit einer Fräsmaschine, einer Drehmaschine oder einer Wirbelmaschine erzeugt werden. Bevorzugte Materialien zur Erzeugung der Schneckenextruder sind Stähle, insbesondere Nitrierstähle, Chrom-, Werkzeug- und Edelstähle, pulvermetallurgisch hergestellte metallische Verbundwerkstoffe auf Basis von Eisen, Nickel oder Kobalt, ingenieurkeramische Werkstoffe wie z.B. Zirkonoxid oder Siliziumcarbid.

Alle hier aufgeführten erfindungsgemäßen Verfahren werden vorzugsweise auf einem Computer ausgeführt. Gegenstand der vorliegenden Erfindung ist auch ein Computersystem zur Ausführung eines der erfindungsgemäßen Verfahren. Ferner ist ein weiterer Gegenstand der vorliegenden Erfindung ein Computerprogrammprodukt mit Programmcodemitteln zur Ausführung eines der erfindungsgemäßen Verfahren auf einem Computer.

Die Erfindung wird nachstehend anhand von Beispielen näher erläutert ohne sie jedoch hierauf zu beschränken.

### Beispiel 1: Erstellung eines Prognose-Werkzeugs für ein zweigängiges Schneckenelement mit Erdmenger-Schneckenprofil

Das vorliegende Beispiel beschreibt ein Verfahren zur Erstellung eines Prognose-Werkzeugs für Schneckenextruder und/oder Extrusionsverfahren, umfassend die folgenden Schritte
(a) Festlegung eines Parameterraumes,
(b) Auswahl von repräsentativen Wertekombinationen innerhalb des Parameterraumes,
(c) Berechnung von Ergebniskennzahlen für die ausgewählten Wertekombinationen mit Hilfe von Simulationsrechnungen,
(d) Erstellung eines datenbasierten Modells auf Basis der ausgewählten Wertekombinationen und der berechneten Ergebniskennzahlen,
(e) Gegebenenfalls Wiederholung eines oder mehrerer der Schritte (a) bis (e), bis mit Hilfe des datenbasierten Modells die Ergebniskennzahlen hinreichend genau berechnet werden können.

### Schritt (a): Festlegung des Parameterraumes.

Wie in [1] auf der Seite 151 beschrieben ist, ist die Geometrie eines Förderelements mit einem Erdmenger-Schneckenprofil durch die Angabe von 6 geometrischen Parametern eindeutig definiert. Diese 6 Parameter sind die Gangzahl, der Gehäusedurchmesser, der Achsabstand, das Spiel zwischen Schnecke und Gehäuse, das Spiel zwischen den beiden Schnecken und die Steigung. Um die Anzahl der Parameter zu reduzieren und um eine allgemeingültige Darstellung zu erhalten, führt man zweckmäßigerweise dimensionslose geometrische Parameter ein. Als Bezugsgröße wird der Gehäusedurchmesser gewählt. Daraus folgt, dass durch die Angabe von 5 dimensionslosen geometrischen Parametern die Geometrie eines Förderelementes mit einem Erdmenger-Schneckenprofil eindeutig definiert ist. Diese 5 Parameter sind die Gangzahl Z, der dimensionslose Achsabstand A, das dimensionslose Spiel zwischen Schnecke und Gehäuse D, das dimensionslose Spiel zwischen den beiden Schnecken S und die dimensionslose Steigung T.

In der Praxis werden typischerweise Förderelemente mit einer Gangzahl Z von 1, 2 oder 3 verwendet. Zweckmäßigerweise wird für jede Gangzahl ein eigenes Prognose-Werkzeug erstellt. In diesem Beispiel wird ein zweigängiges Förderelement betrachtet. Es gilt daher Z=2. Es verbleiben damit vier dimensionslose Kennzahlen, für die ein Wertebereich festgelegt werden muss. Für den dimensionslosen Achsabstand A wurde ein Wertebereich von 0,72≤A≤0,91 gewählt. Für das dimensionslose Spiel zwischen Schnecke und Gehäuse D wurde ein Wertebereich von 0,002≤D≤0,024 gewählt. Für das dimensionslose Spiel zwischen den beiden Schnecken S wurde ein Wertebereich von 0,004≤S≤0,060 gewählt. Für die dimensionslose Steigung T wurde ein Wertebereich von 0,3≤T≤4,0 gewählt.

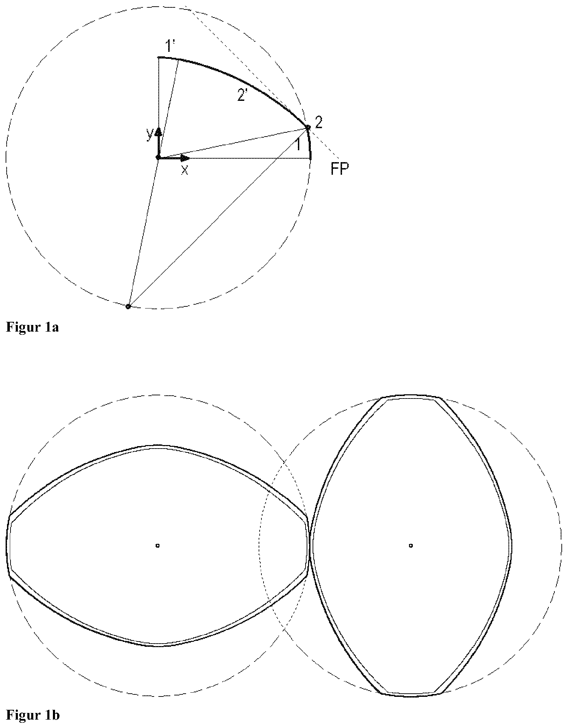

In Figur 1a ist die Konstruktion eines selbstreinigenden und dicht kämmenden Erdmenger-Schneckenprofils gezeigt. Ein Erdmenger-Schneckenprofil weist zwei Symmetrieachsen, die sich in einem Winkel von 90° schneiden, auf. Es reicht daher aus, ein Viertel des Schneckenprofils zu erzeugen und dann durch Spiegelung an den Symmetrieachsen das vollständige Schneckenprofil zu erhalten.

Nachfolgend wird die Figur 1a näher beschrieben. In der Mitte der Figur liegt das xy-Koordinatensystem, in dessen Ursprung sich der Drehpunkt des Schneckenprofils befindet. Die Kreisbögen des Schneckenprofils sind durch dicke, durchgezogene Linien gekennzeichnet, die mit den jeweiligen Nummern der Kreisbögen versehen sind. Die Mittelpunkte der Kreisbögen werden durch kleine Kreise dargestellt. Die Mittelpunkte der Kreisbögen sind mit dünnen, durchgezogenen Linien sowohl mit dem Anfangspunkt als auch mit dem Endpunkt des dazugehörigen Kreisbogens verbunden. Die Gerade FP wird durch eine dünne, gepunktete Linie dargestellt.

Ein Viertel eines Erdmenger-Schneckenprofils ergibt sich aus 2 x 2 Kreisbögen, welche miteinander korrespondieren. Die Summe der Radien zweier korrespondierender Kreisbögen (1 und 1', 2 und 2') ist gleich dem Achsabstand. Die Radien 1 und 1' sind gleich dem Außenradius bzw. gleich dem Kernradius. Die Radien 2 und 2' sind gleich Null bzw. gleich dem Achsabstand. Die Zentriwinkel zweier korrespondierender Kreisbögen sind gleich groß. Die Summe der Zentriwinkel 1 und 2 ist gleich π/4. Die Mittelpunkte der Kreisbögen 1 und 1' liegen im Koordinatenursprung. Alle Kreisbögen gehen tangential ineinander über. Die Kreisbögen 2 und 2' berühren die Gerade FP in einem gemeinsamen Punkt. Der Abstand der Gerade FP vom Koordinatenursprung ist gleich dem halben Achsabstand und die Steigung dieser Geraden beträgt -1.

In der Figur la beträgt der dimensionslose Achsabstand A=0,8333, der dimensionslose Außenradius RA=0,5 und der dimensionslose Kernradius RK=0,3333. Die korrespondierenden Kreisbögen 1 und 1' bzw. 2 und 2' besitzen einen Zentriwinkel im Bogenmaß von 0,1997 bzw. 0,5857.

Wie beispielsweise in der Veröffentlichung [1] auf den Seiten 27 bis 30 ausgeführt, weisen Anordnungen aus Schneckenelementen und Gehäuse in der Praxis stets so genannte Spiele auf. Dem Fachmann sind Methoden bekannt, um ausgehend von einem vorgegebenen, selbstreinigenden, dicht kämmenden Schneckenprofil, ein Schneckenprofil mit Spielen abzuleiten. Bekannte Methoden hierfür sind beispielsweise die in [1] auf den Seiten 28ff beschriebene Möglichkeit der Achsabstand-Vergrößerung, der Längsschnitt-Äquidistanten und der Raumäquidistanten. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elementes) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. In diesem Beispiel wird die Raumäquidistante verwendet.

Die Figur 1b zeigt sowohl das selbstreinigende, dicht kämmende Erdmenger-Schneckenprofil gemäß Figur 1a als auch ein daraus abgeleitetes Schneckenprofil mit Spielen innerhalb eines achtförmigen Schneckengehäuses. Das Schneckengehäuse wird durch eine dünne, gestrichelte Linie dargestellt. Innerhalb der Durchdringung der beiden Gehäusebohrungen werden die beiden Bohrungen durch dünne, gepunktete Linien charakterisiert. Die Mittelpunkte der beiden Gehäusebohrungen sind identisch mit den beiden Drehpunkten der Schneckenprofile und sind jeweils durch einen kleinen Kreis gekennzeichnet. Die dicht kämmenden, selbstreinigenden Schneckenprofile werden durch eine dicke, durchgezogene Linie gekennzeichnet. Die Schneckenprofile mit Spielen werden durch eine dünne, durchgezogene Linie dargestellt. Das Schneckenprofil mit Spielen wurde über die Methode der Raumäquidistanten erhalten. Das dimensionslose Spiel zwischen den beiden Schnecken beträgt S=0,02. Das dimensionslose Spiel zwischen Schnecke und Gehäuse beträgt D=0,01. Die dimensionslose Steigung des dazugehörigen Schneckenelements beträgt T=1 (das Schneckenprofil mit Spiel hängt bei der Methode der Raumäquidistanten von der Steigung ab).

### Schritt (b): Auswahl von repräsentativen Wertekombinationen innerhalb des Parameterraumes.

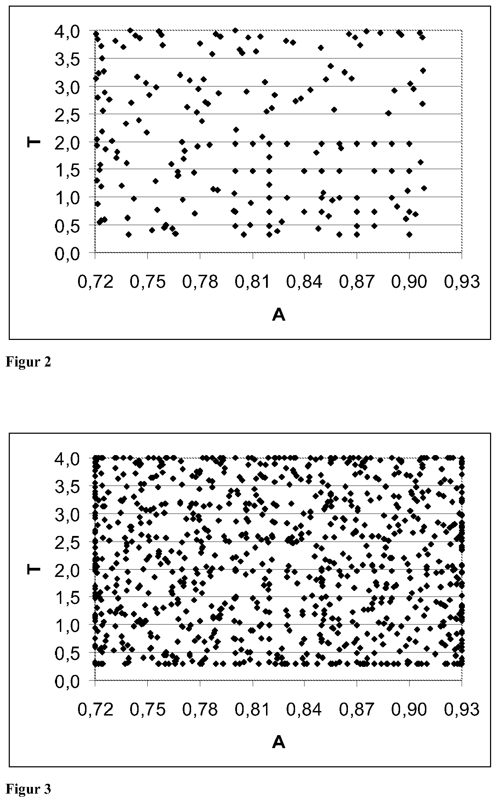

In Figur 2 werden 255 Wertekombinationen zwischen dem dimensionslosen Achsabstand A und der dimensionslosen Steigung T im gewählten Parameterraum gezeigt. Die Wertekombinationen können auf verschiedene Art und Weise festgelegt werden. Falls ein bestimmter Wert innerhalb des Parameterraums von besonderem Interesse ist, so können auf diesen Wert besonders viele Wertekombinationen gelegt werden. Beispielsweise ist der dimensionslose Achsabstand A=0,82 von besonderem Interesse, da gebräuchliche Schneckenextruder genau diesen Achsabstand aufweisen. Auf einer gedachten Linie zwischen T=0,3 und T=2,0 finden sich daher bei A=0,82 besonders viele Wertekombinationen. Analoge Überlegungen führen zwischen A=0,8 und A=0,9 zu besonders vielen Wertekombinationen bei T=2,0. Weitere Wertekombinationen können beispielsweise so verteilt werden, dass die einzelnen Wertekombinationen möglichst weit voneinander entfernt sind. Aus dem zweidimensionalen Abstand der Wertekombinationen in Figur 2 kann nicht auf den wahren Abstand im vierdimensionalen Parameterraum geschlossen werden.

In Figur 3 werden 1015 Wertekombinationen zwischen dem dimensionslosen Achsabstand A und der dimensionslosen Steigung T im gewählten Parameterraum gezeigt. Neben einer allgemeinen Erhöhung der Anzahl der Wertekombinationen werden hier insbesondere Wertekombinationen auf dem Rand des Parameterraums gesetzt. Datenbasierte Modelle sind nur sehr begrenzt extrapolationsfähig. Daher ist es wichtig, gerade die Ränder des Parameterraums mit Wertekombinationen zu versehen, um bis zum Rand des Parameterraums eine Interpolation zu gewährleisten.

### Schritt (c): Berechnung von Ergebniskennzahlen für die ausgewählten Wertekombinationen mit Hilfe von Simulationsrechnungen.

Basierend auf den ausgewählten Wertekombinationen erfolgt die Berechnung von Ergebniskennzahlen mit Hilfe von Simulationsrechnungen.
Ergebniskennzahlen können beispielsweise geometrische Kennzahlen sein. Geometrische Kennzahlen sind beispielsweise der Kammwinkel eines Schneckenelements, der Steigungswinkel eines Schneckenelements bezogen auf den Außenradius, der Steigungswinkel eines Schneckenelements bezogen auf den Kernradius, die Querschnittsfläche eines Schneckenelements, die Schneckenoberfläche eines Schneckenelements, die Gehäuseoberfläche, die Summe aus Schneckenoberfläche und Gehäuseoberfläche, die freie Querschnittsfläche eines Schneckenelements (also die durchströmbare Querschnittfläche zwischen Schneckenelement und Gehäuse) sowie die bereits genannten Flächen bezogen auf die Steigung eines Schneckenelements (also beispielsweise die Schneckenoberfläche bezogen auf die Steigung). Die genannten geometrischen Kennzahlen werden vorteilhafter Weise in einem Simulationsprogramm zur Erzeugung von Geometrien von Schneckenelementen, insbesondere zur Erzeugung von Geometrien von Förderelementen, Knetelementen, Mischelementen und Übergangselementen berechnet.

Ergebniskennzahlen können beispielsweise Kennzahlen zur Beurteilung der Gitterqualität eines Rechengitters sein, welches zur Berechnung der Strömungsvorgänge in einem Schneckenelement benutzt wird. Kennzahlen zur Beurteilung der Gitterqualität eines Rechengitters sind beispielsweise *Scewness, Aspect ratio* sowie *Warpage* (siehe Gambit User's Guide, Fluent Inc., Lebanon, NH, USA, 2006). Die genannten Kennzahlen zur Gitterqualität werden vorteilhafter Weise in einem Simulationsprogramm zur Erzeugung von Rechengittern für Schneckenelemente, insbesondere zur Erzeugung von Rechengitter für Förderelementen, Knetelementen, Mischelementen und Übergangselementen berechnet.

Ergebniskennzahlen können beispielsweise Kennzahlen zur Charakterisierung des Betriebsverhaltens eines Schneckenelements sein. Wie der Fachmann weiß und wie es in [1] auf den Seiten 129 bis 146 nachzulesen ist, kann das Betriebsverhalten von Schneckenelementen wie Förder-, Knet- und Mischelementen durch eine Druckdifferenz-Durchsatz- und durch eine Leistungs-Durchsatz-Charakteristik beschrieben werden. Um eine Übertragbarkeit auf unterschiedliche Extrudergrößen zu erleichtern, werden die Größen Druckdifferenz, Leistung und Durchsatz häufig in ihrer dimensionslosen Form verwendet. Im Fall einer plastischen Masse mit Newtonschem Fließverhalten ergibt sich ein linearer Zusammenhang sowohl zwischen Druckdifferenz und Durchsatz als auch zwischen Leistung und Durchsatz. In der Druckdifferenz-Durchsatz-Charakteristik werden die Achsenschnittpunkte mit A1 und A2 gekennzeichnet ([1], Seite 133). Der Betriebspunkt A1 kennzeichnet den Eigendurchsatz eines Schneckenelements. Der Betriebspunkt A2 kennzeichnet das Druckaufbauvermögen ohne Durchsatz. In der Leistungs-Durchsatz-Charakteristik werden die Achsenschnittpunkte mit B1 und B2 gekennzeichnet ([1], Seite 136). Der Punkt B1 ist der sogenannte Turbinenpunkt. Ist der Durchsatz größer als B1, so wird Leistung an die Schneckenwellen abgegeben. Der Betriebspunkt B2 kennzeichnet den Leistungsbedarf ohne Durchsatz.
In einer Druckaufbauzone kann nur ein Teil der eingebrachten Leistung in Strömungsleistung überführt werden. Der Rest der eingebrachten Leistung dissipiert. Die Strömungsleistung berechnet sich als Produkt von Durchsatz und Druckdifferenz. Wie der Fachmann leicht erkennt, ist die Strömungsleistung an den Achsenschnittpunkten A1 und A2 jeweils gleich 0, da entweder die Druckdifferenz gleich 0 (A1) oder der Durchsatz gleich 0 (A2) ist. Im Bereich zwischen A1 und A2 sind sowohl die Druckdifferenz als auch der Durchsatz größer 0 und es ergibt sich eine positive Strömungsleistung. Dividiert man die Strömungsleistung eines Betriebspunkts gegeben durch einen Durchsatz durch die zu diesem Betriebspunkt von den Schneckenwellen abgegebene Leistung, so erhält man den Wirkungsgrad zum Druckaufbau an diesem Betriebspunkt. Durch Ableitung des Wirkungsgrads nach dem Durchsatz und anschließende Nullstellensuche lässt sich der maximale Wirkungsgrad eines Schneckenelements finden.

Wie in K. Kohlgrüber, Co-Rotating Twin-Screw Extruders, Hanser Verlag, 2007, ISBN 978-3-446-41372-6 auf Seite 126 beschrieben ist, stellt sich im Schneckenelement eine Teilfüllung ein, wenn der Durchsatz pro Umdrehung kleiner als der Betriebspunkt A1 ist und kein Gegendruck anliegt. Wenn der Füllgrad gegen Null geht, wird der Leistungsbedarf eines Schneckenelements durch den Betriebspunkt B4 gekennzeichnet. In diesem Betriebszustand sind Wellen und Gehäuse mit Schmelze benetzt, es wird aber kein Produkt gefördert. Bis zur vollständigen Füllung des Schneckenelementes, welche am Betriebspunkt A1 erreicht wird, steigt der Leistungsbedarf mit dem Füllgrad an. Der am Betriebspunkt A1 benötigte Leistungsbedarf wird mit B5 gekennzeichnet.
Kennzahlen zur Charakterisierung des Betriebsverhaltens eines Schneckenelements sind beispielsweise die Betriebspunkte A1, A2, B1, B2, B4 und B5 sowie der Wirkungsgrad zum Druckaufbau für einen gegeben Produktdurchsatz und der maximale erzielbare Wirkungsgrad zum Druckaufbau. Die genannten Kennzahlen zur Charakterisierung des Betriebsverhaltens eines Schneckenelements, insbesondere eines Förderelements, eines Knetelements, eines Mischelements und eines Übergangselements werden vorteilhafter Weise in einem Strömungssimulationsprogramm (CFD-Programm) berechnet.

### Schritt (d): Erstellung eines datenbasierten Modells auf Basis der ausgewählten Wertekombinationen und der berechneten Ergebniskennzahlen.

Die Erzeugung datenbasierter Modelle aus vorliegenden Eingangs- und Ausgangsgrößen zählt zum allgemeinen Stand der Technik. Bekannte datenbasierte Modelle sind beispielsweise: Lineare und Nichtlineare Regressionsmodelle, Lineare Approximationsverfahren, Künstliche Neuronale Netze, Supportvektor Maschinen, Hybrid Modelle.

Zur Erstellung eines Prognose-Werkzeugs für ein zweigängiges Schneckenelement mit Erdmenger-Schneckenprofil wurde ein Hybrid Modell verwendet.

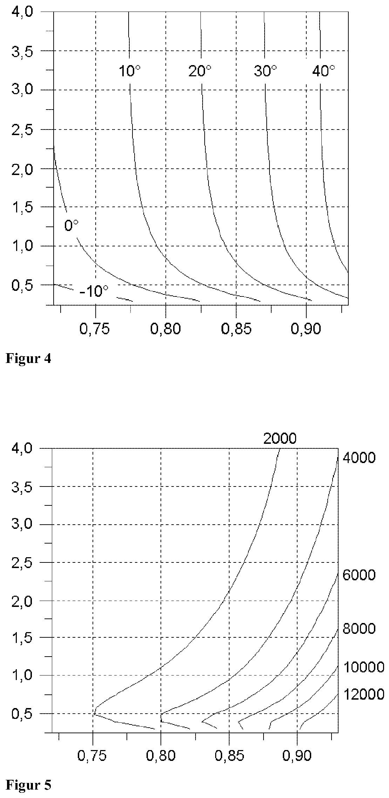

Basierend auf den Wertekombinationen gemäß Figur 3 zeigt Figur 4 den vorhergesagten Kammwinkel eines zweigängigen Förderelements in Abhängigkeit von dem dimensionslosen Achsabstand A (horizontale Achse) und der dimensionslosen Steigung T (vertikale Achse). Das dimensionslose Spiel zwischen den Schnecken ist auf S=0,02 gesetzt. Das dimensionslose Spiel zwischen Schnecke und Gehäuse ist auf D=0,01 gesetzt.

Basierend auf den Wertekombinationen gemäß Figur 3 zeigt Figur 5 den vorhergesagten Druckaufbauparameter A2 eines zweigängigen Förderelements in Abhängigkeit von dem dimensionslosen Achsabstand A und der dimensionslosen Steigung T. Das dimensionslose Spiel zwischen den Schnecken ist auf S=0,02 gesetzt. Das dimensionslose Spiel zwischen Schnecke und Gehäuse ist auf D=0,01 gesetzt.

Ein durchgeführter Vergleich zwischen dem berechneten und dem vorhergesagten Druckaufbauparameter A2 brachte nachfolgende Ergebnisse. Werden alle Wertekombinationen in den Vergleich einbezogen, ergibt sich im Mittel eine Abweichung zwischen Rechnung und Vorhersage von 6,75% mit einer Standardabweichung von 11,3%. Schränkt man den Bereich der Wertekombinationen auf Schneckenelemente mit positivem Kammwinkel ein, so ergibt sich im Mittel eine Abweichung zwischen Rechnung und Vorhersage von 4,04% mit einer Standardabweichung von 5,16%. Schränkt man den Bereich der Wertekombinationen weiter dahingehend ein, dass ein Abstand von den Grenzen des Parameterraums von jeweils 5% eingehalten werden muss (Länge eines Parameters gleich 100%), so ergibt sich im Mittel eine Abweichung zwischen Rechnung und Vorhersage von 3,22% mit einer Standardabweichung von 3,59%.

Aus einem Vergleich der Figuren 4 und 5 wird deutlich, dass sich der Druckaufbauparameter A2 gerade im Bereich von Kammwinkeln kleiner gleich Null sehr stark ändert. Bei gleicher Dichte der Wertekombinationen wird hierdurch in diesem Bereich eine schlechtere Vorhersagegenauigkeit erreicht. Ferner nimmt die Vorhersagegenauigkeit trotz des Setzens zusätzlicher Wertekombinationen auf den Rändern des Parameterraumes zum Rand hin etwas ab.

### Schritt (e): Gegebenenfalls Wiederholung eines oder mehrerer der Schritte (a) bis (e), bis mit Hilfe des datenbasierten Modells die Ergebniskennzahlen hinreichend genau berechnet werden können.

Im Rahmen dieses Beispiels wurden die Schritte (b) bis (d) wiederholt. Eine Vorhersagegenauigkeit von im Mittel 3,22% mit einer Standardabweichung von 3,59% ist für eine Auslegung von Schneckenextrudern vielfach nicht akzeptabel.
Die Anzahl der Wertekombinationen wurde auf insgesamt 3358 erhöht. Die weiteren Wertekombinationen wurden zum einen möglichst gleichmäßig im Parameterraum verteilt, zum anderen wurden wiederum zusätzliche Wertekombinationen auf die Ränder des Parameterraums gesetzt. Es wurde auf die Möglichkeit verzichtet, weitere Wertekombinationen entsprechend einer lokalen Abweichungsgröße oder lokaler Gradienten der Ergebniskennzahlen zu setzen.
Nach der Berechnung der Ergebniskennzahlen und der Erzeugung eines neuen datenbasierten Modells wurde wiederum ein Vergleich zwischen dem berechneten und dem vorhergesagten Druckaufbauparameter A2 durchgeführt. Werden alle Wertekombinationen in den Vergleich einbezogen, ergibt sich im Mittel eine Abweichung zwischen Rechnung und Vorhersage von 3,07% mit einer Standardabweichung von 4,74%. Schränkt man den Bereich der Wertekombinationen auf Schneckenelemente mit positivem Kammwinkel ein, so ergibt sich im Mittel eine Abweichung zwischen Rechnung und Vorhersage von 1,91% mit einer Standardabweichung von 2,41%. Schränkt man den Bereich der Wertekombinationen weiter dahingehend ein, dass ein Abstand von den Grenzen des Parameterraums von jeweils 5% eingehalten werden muss (Länge eines Parameters gleich 100%), so ergibt sich im Mittel eine Abweichung zwischen Rechnung und Vorhersage von 1,52% mit einer Standardabweichung von 1,55%. Es ergibt sich eine Reduzierung der mittleren Abweichung und der Standardabweichung von bis zu 58%.

Eine Vorhersagegenauigkeit von im Mittel 1,52% mit einer Standardabweichung von 1,55% ist für eine Auslegung von Schneckenextrudern ausreichend.

### Beispiel 2: Erstellung eines Prognose-Werkzeugs für ein zweigängiges Schneckenelement mit einem im Vergleich zu einem Erdmenger-Schneckenprofil reduziertem Kammwinkel

### Schritt (a): Festlegung des Parameterraumes.

Schneckenelemente mit reduziertem Kammwinkel, im Folgenden als Rita-Schneckenelemente (Rita = *reduced tip angle*) bezeichnet, weisen einen im Vergleich zum Erdmenger-Schneckenprofil reduzierten Kammwinkel auf. Der relative Kammwinkel R ist dabei definiert aus dem Quotienten des Kammwinkels des Rita-Schneckenprofils und des Kammwinkels des Erdmenger-Schneckenprofils, wobei jeweils die selbstreinigenden, dicht kämmenden Schneckenprofile betrachtet werden. Für den relativen Kammwinkel R wird ein Parameterraum von 0≤R≤1 gewählt. Die weiteren dimensionslosen Parameter und dazugehörige Parameterräume des Rita-Schneckenelements entsprechen dem Erdmenger-Schneckenelement aus Beispiel 1.

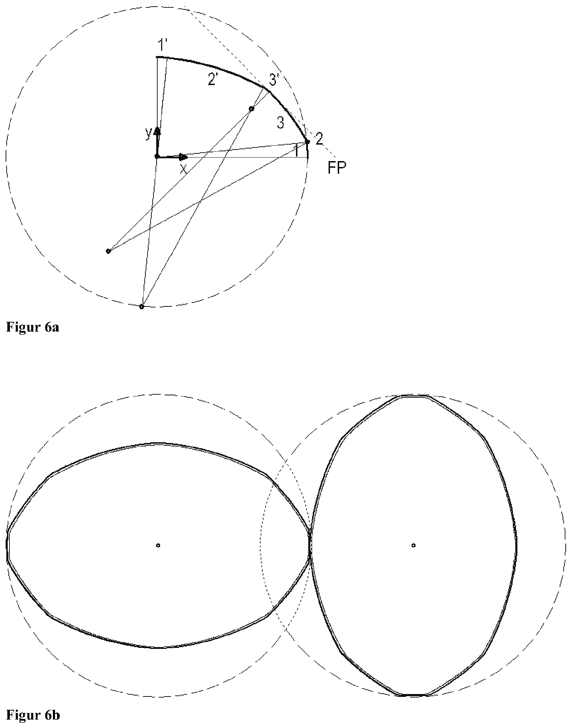

Figur 6a zeigt ein selbstreinigendes, dicht kämmendes Rita-Schneckenprofil. Der prinzipielle Aufbau der Figur 6a entspricht dem der Figur 1a. Ein Viertel eines Rita-Schneckenprofils ergibt sich aus 2 x 3 Kreisbögen, welche miteinander korrespondieren. In der Figur 6a beträgt der dimensionslose Achsabstand A=0,8333. Die Radien 1 bzw. 1' sind gleich dem Außenradius RA=0,5 bzw. gleich dem Kernradius RK=0,3333. Die Radien 2 bzw. 2' sind gleich Null bzw. gleich Achsabstand. Die Radien 3 bzw. 3' sind gleich dem 0,9-fachen Achsabstand bzw. gleich dem 0,1-fachem Achsabstand. Die korrespondierenden Kreisbögen 1 und 1', 2 und 2' bzw. 3 und 3' besitzen einen Zentriwinkel im Bogenmaß von 0,0999, 0,4035 bzw. 0,2820. Die Mittelpunkte der Kreisbögen 1 und 1' liegen im Koordinatenursprung. Alle Kreisbögen gehen tangential ineinander über. Die Kreisbögen 3 und 3' berühren die Gerade FP in einem gemeinsamen Punkt.

Die Figur 6b zeigt sowohl das selbstreinigende, dicht kämmende Rita-Schneckenprofil gemäß Figur 6a als auch ein daraus abgeleitetes Schneckenprofil mit Spielen innerhalb eines achtförmigen Schneckengehäuses. Der Aufbau der Figur 6b entspricht der Figur 1b. Das Schneckenprofil mit Spielen wird über die Methode der Raumäquidistanten erhalten. Das dimensionslose Spiel zwischen den beiden Schnecken beträgt S=0,01. Das dimensionslose Spiel zwischen Schnecke und Gehäuse beträgt D=0,01. Die dimensionslose Steigung des dazugehörigen Schneckenelements beträgt T=1.

### Schritt (b): Auswahl von repräsentativen Wertekombinationen innerhalb des Parameterraumes.

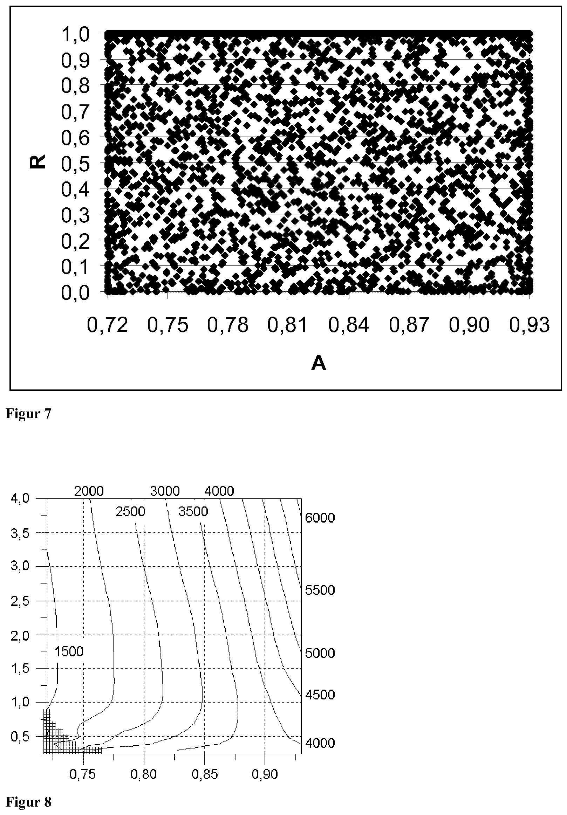

In Figur 7 werden 6005 Wertekombinationen zwischen dem dimensionslosen Achsabstand A und dem relativen Kammwinkel R im gewählten Parameterraum gezeigt. Von diesen Wertekombinationen werden 3358 Wertekombinationen aus Beispiel 1 mit einem relativen Kammwinkel von R=1 übernommen. Weitere 2647 Wertekombinationen kennzeichnen relative Kammwinkel kleiner R=1. Die Auswahl der Wertekombinationen erfolgt mit dem im 1. Beispiel beschriebenen Methoden.

Basierend auf dem Erdmenger-Schneckenelement lassen sich übergangslos neuartige Schneckenelemente in ein Prognose-Werkzeug für Schneckenextruder und/oder Extrusionsverfahren integrieren. Das Prognose-Werkzeug beinhaltet sowohl das neuartige Rita-Schneckenelement als auch das Erdmenger-Schneckenelement. Alternativ ist es möglich ein Prognose-Werkzeug zu erstellen, welches nur auf den 2647 Wertekombinationen mit einem relativen Kammwinkel kleiner R=1 aufbaut.

### Schritt (c): Berechnung von Ergebniskennzahlen für die ausgewählten Wertekombinationen mit Hilfe von Simulationsrechnungen.

Basierend auf den ausgewählten Wertekombinationen erfolgt die Berechnung von Ergebniskennzahlen mit Hilfe von Simulationsrechnungen. Es werden die gleichen Ergebniskennzahlen wie im 1. Beispiel berechnet.

### Schritt (d): Erstellung eines datenbasierten Modells auf Basis der ausgewählten Wertekombinationen und der berechneten Ergebniskennzahlen.

Zur Erstellung eines Prognose-Werkzeugs für ein zweigängiges Schneckenelement mit Rita-Schneckenprofil wird ein Hybrid Modell verwendet. Das erzeugte datenbasierte Modell erlaubt die Vorhersage der gewünschten Ergebniskennzahlen.

Basierend auf den Wertekombinationen gemäß Figur 7 zeigt Figur 8 den vorhergesagten Betriebspunkt B2 eines zweigängigen Rita-Förderelements mit einem relativen Kammwinkel von R=1 - entsprechend einem Erdmenger-Schneckenelement - in Abhängigkeit von dem dimensionslosen Achsabstand A (horizontale Achse) und der dimensionslosen Steigung T (vertikale Achse). Das dimensionslose Spiel zwischen den Schnecken ist auf S=0,01 gesetzt. Das dimensionslose Spiel zwischen Schnecke und Gehäuse ist auf D=0,01 gesetzt. Die Figur 9 zeigt ebenfalls den vorhergesagten Betriebspunkt B2 eines zweigängigen Rita-Förderelements mit einem relativen Kammwinkel von R=0,5. Vergleichend zeigt sich, dass ein kleinerer relativer Kammwinkel R zu einem geringerem Energieeintrag in den Extruder führt.

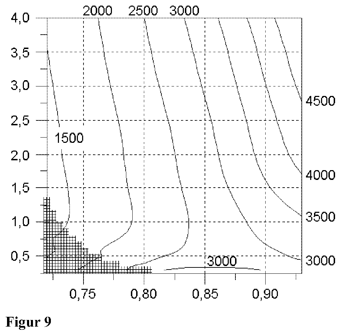

Der in den Figuren 8 und 9 jeweils links unten gekennzeichnete schraffierte Bereich spiegelt den Bereich wider, in dem negative Kammwinkel vorliegen. Das Prognose-Werkzeug erlaubt die Bestimmung eines Schneckenelements mit Anforderungen an zum Beispiel B2 in Kombination mit weiteren Anforderungen an zum Beispiel dem Kammwinkel.

Ein durchgeführter Vergleich zwischen dem berechneten und dem vorhergesagten Betriebspunkt B2 brachte nachfolgende Ergebnisse. Werden alle Wertekombinationen in den Vergleich einbezogen, die einen positiven Kammwinkel aufweisen und einen Abstand von den Grenzen des Parameterraums von jeweils 5% einhalten (Länge eines Parameters gleich 100%), so ergibt sich im Mittel eine Abweichung zwischen Rechnung und Vorhersage von 0,93% mit einer Standardabweichung von 0,97%.

### Schritt (e): Gegebenenfalls Wiederholung eines oder mehrerer der Schritte (a) bis (e), bis mit Hilfe des datenbasierten Modells die Ergebniskennzahlen hinreichend genau berechnet werden können.

Aufgrund der hohen Vorhersagegenauigkeit war keine Wiederholung mit weiteren Wertekombinationen notwendig.

### Anhang

### Konstruktionsvorschrift zur Erzeugung gleichsinnig drehender, paarweise exakt abschabender Schneckenextruder

Überraschend wurden die Grundprinzipien gefunden, die der Geometrie von paarweise exakt abschabenden Schneckenprofilen zugrunde liegen. Diese sind in den Anmeldungen PCT/EP2009/003549 und PCT/EP2009/004249 beschrieben. Diese Grundprinzipien erlauben es, Konstruktionsvorschriften für paarweise exakt abschabende Schneckenextruder zu erstellen und damit auch Parameter zu definieren, die paarweise exakt abschabende Schneckenextruder eindeutig beschreiben.

Die Grundprinzipien lauten:
1. Die Profile eines erzeugenden und eines erzeugte Schneckenprofils lassen sich immer aus Kreisbögen zusammensetzen.
   Die Größe eines Kreisbogens ist durch die Angabe seines Zentriwinkels und seines Radius gegeben. Im Folgenden wird der Zentriwinkel eines Kreisbogens kurz als der Winkel eines Kreisbogens bezeichnet. Die Position eines Kreisbogens lässt durch die Position seines Mittelpunkts und durch die Position seines Anfangs- oder Endpunkts festlegen, wobei es nicht festgelegt ist, welches der Anfangs- und welches der Endpunkt ist, da ein Kreisbogen ausgehend vom Anfangspunkt und endend im Endpunkt im Uhrzeigersinn oder gegen den Uhrzeigersinn konstruiert werden kann. Anfangs- und Endpunkt sind also vertauschbar.
2. Die Kreisbögen der Profile gehen an ihren Anfangs- und Endpunkten tangential ineinander über.
3. Das Grundprinzip 2 gilt auch für Profile mit einem "Knick", wenn der Knick durch einen Kreisbogen beschrieben wird, dessen Radius gleich 0 ist.
   Die "Größe des Knicks" ist durch den entsprechenden Winkel des Kreisbogens mit dem Radius 0 gegeben, d.h. bei einem Knick erfolgt ein Übergang eines ersten Kreisbogens durch Drehung um den Winkel eines zweiten Kreisbogens mit Radius Null in einen dritten Kreisbogen. Oder anders ausgedrückt: eine Tangente an den ersten Kreisbogen im Mittelpunkt des zweiten Kreisbogens mit dem Radius Null schneidet eine Tangente an den dritten Kreisbogen ebenfalls im Mittelpunkt des zweiten Kreisbogens in einem Winkel, der dem Winkel des zweiten Kreisbogens entspricht. Unter Berücksichtigung des zweiten Kreisbogens gehen alle benachbarten Kreisbögen erster → zweiter → dritter tangential ineinander über. Zweckmäßigerweise wird ein Kreisbogen mit einem Radius Null wie ein Kreisbogen behandelt, dessen Radius gleich eps ist, wobei eps eine sehr kleine positive reelle Zahl ist, die gegen 0 strebt (eps<<1, eps →70).
4. Jeweils ein Kreisbogen des erzeugenden Schneckenprofils "korrespondiert" mit einem Kreisbogen des erzeugten Schneckenprofils, wobei unter "korrespondieren" verstanden wird, dass
   - die Winkel von korrespondierenden Kreisbögen gleich groß sind,
   - die Summe der Radien korrespondierender Kreisbögen gleich dem Achsabstand a ist,
   - je eine der Verbindungslinien zwischen dem Mittelpunkt eines Kreisbogens des erzeugenden Schneckenprofils und dessen Endpunkten parallel zu je einer der Verbindungslinien zwischen dem Mittelpunkt des korrespondierenden Kreisbogens des erzeugten Schneckenprofils und dessen Endpunkten verläuft,
   - die Richtungen, in denen die Endpunkte eines Kreisbogens des erzeugenden Schneckenprofils vom Mittelpunkt des Kreisbogens aus liegen, jeweils entgegengesetzt sind zu den Richtungen, in denen die Endpunkte des korrespondierenden Kreisbogens des erzeugten Schneckenprofils vom Mittelpunkt des Kreisbogens des erzeugten Schneckenprofils aus liegen,
   - der Mittelpunkt eines Kreisbogens des erzeugenden Schneckenprofils einen Abstand zum Mittelpunkt eines korrespondierenden Kreisbogens des erzeugten Schneckenprofils hat, der dem Achsabstand entspricht,
   - die Verbindungslinie zwischen dem Mittelpunkt eines Kreisbogens erzeugenden Schneckenprofils und dem Mittelpunkt des korrespondierenden Kreisbogens des erzeugten Schneckenprofils parallel zu der Verbindungslinie zwischen dem Drehpunkt des erzeugenden Schneckenprofils und dem Drehpunkt des erzeugten Schneckenprofils ist,
   - die Richtung, in die der Mittelpunkt eines Kreisbogens des erzeugenden Schneckenprofils verschoben werden müsste, um mit dem Mittelpunkt des korrespondierenden Kreisbogens des erzeugten Schneckenprofils zur Deckung gebracht zu werden, die gleiche ist, in die der Drehpunkt des erzeugenden Schneckenprofils verschoben werden muss, um mit dem Drehpunkt des erzeugten Schneckenprofils zur Deckung gebracht zu werden.

Auf Basis dieser Grundprinzipien lässt sich ein Konstruktionsverfahren für die Profile von paarweise exakt abschabenden Schneckenwellen formulieren.

Dabei liegen die Profile vorzugsweise in einer Ebene. Die Drehachse des erzeugenden Schneckenprofils und die Drehachse des erzeugten Schneckenprofils stehen jeweils senkrecht auf der besagten Ebene, wobei die Schnittpunkte der Drehachsen mit der besagten Ebene als Drehpunkte bezeichnet werden. Der Abstand der Drehpunkte voneinander wird als Achsabstand a bezeichnet. Unter π ist im Folgenden die Kreiszahl zu verstehen (π≈ 3,14159).

In einem ersten Schritt wird das erzeugende Schneckenprofil erzeugt. Das erzeugende Schneckenprofil bedingt das erzeugte Schneckenprofil.
- Es wird eine Anzahl n an Kreisbögen gewählt, die das erzeugende Schneckenprofil bilden sollen, wobei n eine ganze Zahl ist, die größer oder gleich 1 ist.
- Es wird ein Außenradius ra gewählt, wobei ra einen Wert annehmen kann, der größer als 0 (ra>0) und kleiner oder gleich dem Achsabstand (ra≤a) ist.
- Es wird ein Innenradius ri gewählt, wobei ri einen Wert annehmen kann, der größer oder gleich 0 (ri≥0) und kleiner oder gleich ra (ri≤ra) ist.
- Es werden n Kreisbögen im oder gegen den Uhrzeigersinn um die Drehachse des erzeugenden Schneckenprofils entsprechend den nachfolgenden Anordnungsregeln angeordnet:
   ∘ die Größen von n-1 Kreisbögen werden durch die wählbaren Winkel α_1, α_2, ..., α_(n-1) und die wählbaren Radien r_1, r_2, ..., r_(n-1) festgelegt, wobei die Winkel im Bogenmaß größer oder gleich 0 und kleiner oder gleich 2π und die Radien größer oder gleich 0 und kleiner oder gleich dem Achsabstand a sind,
   ∘ der Winkel α_n eines letzten Kreisbogens ergibt sich dadurch, dass die Summe der n Winkel der n Kreisbögen im Bogenmaß gleich 2π ist,
   ∘ der Radius r_n eines letzten Kreisbogens ergibt sich dadurch, dass dieser letzte Kreisbogen das Profil schließt,
   ∘ alle Kreisbögen gehen derart tangential ineinander über, dass sich ein konvexes Profil ergibt,
   ∘ ein Kreisbogen, dessen Radius gleich 0 ist, wird bevorzugt wie ein Kreisbogen behandelt, dessen Radius gleich eps ist, wobei eps eine sehr kleine positive reelle Zahl ist, die gegen 0 strebt (eps<<1, eps→0),
   ∘ jeder der Kreisbögen liegt innerhalb oder auf den Grenzen eines Kreisrings mit dem Außenradius ra und dem Innenradius ri, dessen Mittelpunkt auf dem Drehpunkt des erzeugenden Schneckenprofils liegt,
   ∘ mindestens einer der Kreisbögen berührt den Außenradius ra,
   ∘ mindestens einer der Kreisbögen berührt den Innenradius ri,
- Die Anzahl n' an Kreisbögen, die das erzeugte Schneckenprofil bilden, ihre Winkel α_1', α_2',..., α_n' und ihre Radien r_1', r_2',... , r_n' ergeben sich wie folgt:
   ∘ n' - n
   ∘ α_1' = α_1; α_2' = α_2; ...; α_n' = α_n
   ∘ r_1' = a-r_1; r_2' = a-r_2; ... r_n' = a-r_n
- Die Positionen der n' Kreisbögen, die das erzeugte Schneckenprofil bilden, ergeben sich wie folgt:
   ∘ der Mittelpunkt des i'-ten Kreisbogens des erzeugten Schneckenprofils besitzt einen Abstand vom Mittelpunkt des i-ten Kreisbogens des erzeugenden Schneckenprofils, der gleich dem Achsabstand a ist,
   ∘ der Mittelpunkt des i'-ten Kreisbogens des erzeugten Schneckenprofils besitzt einen Abstand vom Drehpunkt des erzeugten Schneckenprofils, der dem Abstand des Mittelpunkts des i-ten Kreisbogens des erzeugenden Schneckenprofils von dem Drehpunkt des erzeugenden Schneckenprofils entspricht,
   ∘ die Verbindungslinie zwischen dem Mittelpunkt des i'-ten Kreisbogens des erzeugten Schneckenprofils und dem Mittelpunkt des i-ten Kreisbogens des erzeugenden Schneckenprofils ist eine Parallele zu einer Verbindungslinie zwischen dem Drehpunkt des erzeugten Schneckenprofils und dem Drehpunkt des erzeugenden Schneckenprofils,
   ∘ ein Anfangspunkt des i'-ten Kreisbogens des erzeugten Schneckenprofils liegt in einer Richtung bezogen auf den Mittelpunkt des i'-ten Kreisbogens des Profils des erzeugten Schneckenprofils, die entgegengesetzt derjenigen Richtung ist, in der ein Anfangspunkt des i-ten Kreisbogens des Profils des erzeugenden Schneckenprofils bezogen auf den Mittelpunkt des i-ten Kreisbogens des erzeugenden Schneckenprofils liegt,
   wobei i und i' ganze Zahlen sind, die gemeinsam alle Werte im Bereich 1 bis zur Anzahl der Kreisbögen n beziehungsweise n' durchlaufen (i'=i),

Das Konstruktionsverfahren lässt sich prinzipiell allein mit Winkellineal und Zirkel auf Papier ausführen. So wird beispielsweise der tangentiale Übergang zwischen dem i-ten und dem (i+1)-ten Kreisbogen des Profils eines Schneckenelements konstruiert, indem um den Endpunkt des i-ten Kreisbogens ein Kreis mit dem Radius r_(i+1) geschlagen wird und der näher zum Drehpunkt des Schneckenelements gelegene Schnittpunkt dieses Kreises mit der Gerade, die durch den Mittelpunkt und den Endpunkt des i-ten Kreisbogens definiert ist, der Mittelpunkt des (i+1)-ten Kreisbogens ist. Praktischerweise wird man anstelle der Verwendung von Zeichenblock, Winkellineal und Zirkel die Profile mit Hilfe eines Computers virtuell erzeugen.

In der Anmeldung PCT/EP2009/003549 sind weitere Konstruktionsvorschriften für paarweise exakt abschabende Schneckenprofile beschrieben. Hier wird auf Varianten eingegangen, die sich ergeben, wenn die Konstruktion beispielsweise unter Verwendung eines kartesischen Koordinatensystems erfolgt oder wenn die Schneckenprofile gewisse Symmetrien aufweisen.

Die Grundprinzipien und die darauf basierenden Konstruktionsvorschriften erlauben erstmalig, das Profil von selbstreinigenden Schneckenelementen nahezu völlig frei zu gestalten und somit auf eine Anwendung hin durch kleinste Variation von Parametern zu optimieren. Daneben ist es möglich, Schneckenprofile, die nicht aus Kreisbögen aufgebaut und damit nicht selbstreinigend sind, durch eine ausreichend hohe Anzahl an Kreisbögen mit einer gewünschten Genauigkeit zu approximieren. Dabei ist das mittels Kreisbögen approximierte Profil natürlich selbstreinigend.

Damit sind auch Geometrien von Schneckenextrudern einer erfindungsgemäßen Optimierung unter Verwendung eines datenbasierten Modells zugänglich. Dazu müssen aus den zweidimensionalen Profilen zunächst dreidimensionale Schneckenelemente generiert werden. Aus den konstruierten Schneckenprofilen können alle erdenklichen Schnecken- und Übergangselemente erzeugt werden. Insbesondere können Förder-, Knet- und Mischelementen erzeugt werden.

Ein Förderelement zeichnet sich bekanntlich dadurch aus (siehe zum Beispiel [1], Seiten 227 - 248), dass das Schneckenprofil in Achsrichtung kontinuierlich schraubenförmig verdreht und fortgesetzt wird. Dabei kann das Förderelement rechts- oder linksgängig sein. Die Steigung des Förderelements liegt bevorzugt im Bereich des 0,1-fachen bis 10-fachen des Achsabstandes, wobei unter der Steigung die axiale Länge verstanden wird, die für eine vollständige Drehung des Schneckenprofils erforderlich ist, und die axiale Länge eines Förderelements liegt bevorzugt im Bereich des 0,1-fachen bis 10-fachen des Achsabstands.

Ein Knetelement zeichnet sich bekanntlich dadurch aus (siehe zum Beispiel [1], Seiten 227 - 248), dass das Schneckenprofil in Achsrichtung absatzweise in Form von Knetscheiben fortgeführt wird. Die Anordnung der Knetscheiben kann rechts- oder linksgängig oder neutral erfolgen. Die axiale Länge der Knetscheiben liegt bevorzugt im Bereich des 0,05-fachen bis 10-fachen des Achsabstands. Der axiale Abstand zwischen zwei benachbarten Knetscheiben liegt bevorzugt im Bereich des 0,002-fachen bis 0,1-fachen des Achsabstandes.

Mischelemente werden bekanntlich dadurch gebildet (siehe zum Beispiel [1], Seiten 227 - 248), dass Förderelemente mit Durchbrüchen in den Schneckenkämmen ausgeführt werden. Die Mischelemente können rechts- oder linksgängig sein. Ihre Steigung liegt bevorzugt im Bereich des 0,1-fachen bis 10-fachen des Achsabstandes und die axiale Länge der Elemente liegt bevorzugt im Bereich des 0,1-fachen bis 10-fachen des Achsabstandes. Die Durchbrüche haben bevorzugt die Form einer u- oder v-förmigen Nut, die bevorzugt gegenfördernd oder achsparallel angeordnet sind.

Als Übergangselemente werden Schneckenelemente bezeichnet, die einen kontinuierlichen Übergang zwischen zwei verschiedenen Schneckenprofilen ermöglichen, wobei an jedem Punkt des Übergangs ein sich selbst reinigendes Paar von Schneckenprofilen vorliegt. Die verschiedenen Schneckenprofile können dabei z.B. eine unterschiedliche Gangzahl aufweisen. Übergangselemente können rechts- oder linksgängig sein. Ihre Steigung liegt bevorzugt im Bereich des 0,1-fachen bis 10-fachen des Achsabstands und ihre axiale Länge liegt bevorzugt im Bereich des 0,1-fachen bis 10-fachen des Achsabstandes.

Dem Fachmann ist bekannt, dass direkt abschabende Schnecken nicht direkt in einen Doppelschneckenextruder eingesetzt werden können, vielmehr sind Spiele zwischen den Schnecken erforderlich.
Dem Fachmann sind Methoden bekannt, um ausgehend von einem vorgegebenen, exakt abschabenden Schneckenprofil, eine Schnecke mit Spielen abzuleiten. Bekannte Methoden hierfür sind beispielsweise die in [1] auf den Seiten 28 ff beschriebene Möglichkeit der Achsabstand-Vergrößerung, der Längsschnitt-Äquidistanten und der Raumäquidistanten. Bei der Achsabstand-Vergrößerung wird ein Schneckenprofil kleineren Durchmessers konstruiert und um den Betrag des Spiels zwischen den Schnecken auseinandergerückt. Bei der Methode der Längsschnitt-Äquidistanten wird die Längsschnitt-Profilkurve (parallel zur Drehachse des jeweiligen Elementes) um das halbe Spiel Schnecke-Schnecke senkrecht zur Profilkurve nach innen, in Richtung zur Drehachse hin, verschoben. Bei der Methode der Raumäquidistanten wird, ausgehend von der Raumkurve, auf der die Schneckenelemente sich abreinigen, das Schneckenelement in der Richtung senkrecht zu den Flächen des exakt abschabenden Profils um das halbe Spiel zwischen Schnecke und Schnecke verkleinert. Bevorzugt werden die Längsschnitt-Äquidistante und die Raumäquidistante, besonders bevorzugt die Raumäquidistante verwendet.

## Patentansprüche

1. Computerimplementiertes Verfahren zur Erstellung eines Prognose-Werkzeugs für Schneckenextruder und/oder Extrusionsverfahren, mindestens umfassend die folgenden Schritte
(a) Festlegung eines Parameterraumes, wobei die Parameter für die Simulation von Extrusionsverfahren benötigt werden und drei Parametersätze umfassen: Parameter zum Beschreiben der Geometrie der Schneckenextruder, Parameter zum Beschreiben des Extrusionsguts und Verfahrensparameter,
(b) Auswahl von repräsentativen Wertekombinationen innerhalb des Parameterraumes,
(c) Berechnung von Ergebniskennzahlen für die ausgewählten Wertekombinationen mit Hilfe von Simulationsrechnungen,
(d) Erstellung eines datenbasierten Modells auf Basis der ausgewählten Wertekombinationen und der berechneten Ergebniskennzahlen,
(e) Gegebenenfalls Wiederholung eines oder mehrerer der Schritte (a) bis (d), bis mit Hilfe des datenbasierten Modells die Ergebniskennzahlen hinreichend genau berechnet werden können, wobei die Querschnittsprofile von Schneckenelementen für Schneckenextruder durch Kreisbögen beschrieben werden und die Kreisbögen der Profile an ihren Anfangs- und Endpunkten tangential ineinander übergehen, wobei gilt, dass ein Knick durch einen Kreisbogen beschrieben wird, dessen Radius gleich 0 ist, und jeweils ein Kreisbogen des erzeugenden Schneckenprofils mit einem Kreisbogen des erzeugten Schneckenprofils korrespondiert, und das erzeugende Schneckenprofil durch folgende Schritte erzeugt wird:
(1) es wird eine Anzahl n an Kreisbögen gewählt, die das erzeugende Schneckenprofil bilden sollen, wobei n eine ganze Zahl ist, die größer oder gleich 1 ist,
(2) es wird ein Außenradius ra gewählt, wobei ra einen Wert annehmen kann, der größer als 0 und kleiner oder gleich dem Achsabstand a ist,
(3) es wird ein Innenradius ri gewählt, wobei ri einen Wert annehmen kann, der größer oder gleich 0 und kleiner oder gleich ra ist,
(4) es werden n Kreisbögen im oder gegen den Uhrzeigersinn um die Drehachse des erzeugenden Schneckenprofils entsprechend den nachfolgenden Anordnungsregeln angeordnet:
∘ die Größen von n-1 Kreisbögen werden durch die wählbaren Winkel α_1, α_2, ..., α_(n-1) und die wählbaren Radien r_1, r_2, ..., r_(n-1) festgelegt, wobei die Winkel im Bogenmaß größer oder gleich 0 und kleiner oder gleich 2π und die Radien größer oder gleich 0 und kleiner oder gleich dem Achsabstand a sind,
∘ der Winkel α_n eines letzten Kreisbogens ergibt sich dadurch, dass die Summe der n Winkel der n Kreisbögen im Bogenmaß gleich 2π ist,
∘ der Radius r_n eines letzten Kreisbogens ergibt sich dadurch, dass dieser letzte Kreisbogen das Profil schließt,
∘ alle Kreisbögen gehen derart tangential ineinander über, dass sich ein konvexes Profil ergibt,
∘ ein Kreisbogen, dessen Radius gleich 0 ist, wird bevorzugt wie ein Kreisbogen behandelt, dessen Radius gleich eps ist, wobei eps eine sehr kleine positive reelle Zahl ist, die gegen 0 strebt,
∘ jeder der Kreisbögen liegt innerhalb oder auf den Grenzen eines Kreisrings mit dem Außenradius ra und dem Innenradius ri, dessen Mittelpunkt auf dem Drehpunkt des erzeugenden Schneckenprofils liegt,
∘ mindestens einer der Kreisbögen berührt den Außenradius ra,
∘ mindestens einer der Kreisbögen berührt den Innenradius ri.

2. Verfahren zur Vorhersage des Verhaltens von Schneckenextrudern bei der Extrusion eines Extrusionsguts mindestens umfassend die folgenden Schritte:
(I) Erstellung eines datenbasierten Modells als Prognose-Werkzeug nach Anspruch 1,
(II) Eingabe von kennzeichnenden Werten für Schneckenextruder, Extrusionsverfahren und Extrusionsgut in das datenbasierte Modell,
(III) Berechnung von Ergebniskennzahlen mittels des datenbasierten Modells,
(IV) Ausgabe eines Ergebnisses.

3. Verfahren zur Optimierung der Geometrie von Schneckenextrudern und/oder Extrusionsverfahren, mindestens umfassend die folgenden Schritte:
(A) Erstellung eines datenbasierten Modells als Prognose-Werkzeug nach Anspruch 1,
(B) Festlegung eines Zielprofils für die Schneckenextruder und/oder das Extrusionsverfahren,
(C) Identifizierung derjenigen Wertekombinationen, die das festgelegte Zielprofil erfüllen und/oder dem Zielprofil am nächsten kommen,
(D) Ausgabe der in Schritt (C) ermittelten Wertekombinationen.

4. Verfahren zur Herstellung von Schneckenextrudern, mindestens umfassend die folgenden Schritte:
(i) Erstellung eines datenbasierten Modells als Prognose-Werkzeug nach Anspruch 1,
(ii) Festlegung eines Zielprofils für die Schneckenextruder und/oder das Extrusionsverfahren,
(iii) Identifizierung derjenigen Wertekombinationen für die Schneckenextruder, die das festgelegte Zielprofil erfüllen und/oder dem Zielprofil am nächsten kommen,
(iv) Ausgabe und/oder Speicherung der in Schritt (iii) ermittelten Wertekombinationen,
(v) Erstellung von Schneckenextrudern auf Basis der in Schritt (iii) ermittelten Wertekombinationen.

5. Prognose-Werkzeug für Schneckenextruder und/oder Extrusionsverfahren erzeugt durch das Verfahren gemäß Anspruch 1.

6. Computersystem zur Durchführung eines Verfahrens gemäß einem der Ansprüche 1 bis 4.

7. Computerprogrammprodukt mit Programmcodemitteln zur Durchführung Verfahren gemäß einem der Ansprüche 1 bis 4 auf einem Computer.

## Claims

1. Computer-implemented method for creating a forecasting tool for screw extruders and/or extrusion processes, at least comprising the following steps
(a) defining a parameter space,
wherein the parameters are required for the simulation of extrusion processes and comprise three sets of parameters: parameters for describing the geometry of the screw extruders, parameters for describing the extruded material and process parameters,
(b) selecting representative combinations of values within the parameter space,
(c) calculating result characteristics for the selected combinations of values with the aid of simulation calculations,
(d) creating a data-based model on the basis of the selected combinations of values and the calculated result characteristics,
(e) possibly repeating one or more of steps (a) to (d), until the result characteristics can be calculated sufficiently accurately with the aid of the data-based model,
the cross-sectional profiles of screw elements for screw extruders being described by arcs of a circle and the arcs of the profiles merging tangentially with one another at their starting points and end points, it being the case that a kink is described by an arc of which the radius is equal to 0, and an arc of the generating screw profile respectively corresponds to an arc of the generated screw profile, and the generating screw profile is generated by the following steps:
(1) a number n of arcs that are intended to form the generating screw profile is chosen, n being a whole number greater than or equal to 1,
(2) an outer radius ra is chosen, ra being able to assume a value that is greater than 0 and less than or equal to the centreline distance a,
(3) an inner radius ri is chosen, ri being able to assume a value that is greater than or equal to 0 and less than or equal to ra,
(4) n arcs are arranged clockwise or anticlockwise around the axis of rotation of the generating screw profile in a way corresponding to the following rules of arrangement:
∘ the sizes of n-1 arcs are fixed by the selectable angles α_1, α_2, ..., α_(n-1) and the selectable radii r_1, r_2, ..., r_(n-1), the angles in radian measure being greater than or equal to 0 and less than or equal to 2π and the radii being greater than or equal to 0 and less than or equal to the centreline distance a,
∘ the angle α_n of a last arc is obtained by the sum of the n angles of the n arcs in radian measure being equal to 2π,
∘ the radius r_n of a last arc is obtained by this last arc closing the profile,
∘ all the arcs merge tangentially with one another in such a way that a convex profile is obtained,
∘ an arc of which the radius is equal to 0 is preferably treated like an arc of which the radius is equal to eps, where eps is a very small positive real number that tends towards 0,
∘ each of the arcs lies within or on the limits of a circular ring with the outer radius ra and the inner radius ri , the centre point of which lies on the point of rotation of the generating screw profile,
∘ at least one of the arcs makes contact with the outer radius ra,
∘ at least one of the arcs makes contact with the inner radius ri.

2. Method for forecasting the behaviour of screw extruders in the extrusion of an extruded material, at least comprising the following steps:
(I) creating a data-based model as a forecasting tool according to Claim 1,
(II) inputting characterizing values for screw extruders, extrusion processes and extruded material into the data-based model,
(III) calculating result characteristics by means of the data-based model,
(IV) outputting a result.

3. Method for optimizing the geometry of screw extruders and/or extrusion processes, at least comprising the following steps:
(A) creating a data-based model as a forecasting tool according to Claim 1,
(B) defining a target profile for the screw extruders and/or the extrusion process,
(C) identifying those combinations of values that satisfy the defined target profile and/or come closest to the target profile,
(D) outputting the combinations of values determined in step (C).

4. Method for producing screw extruders, at least comprising the following steps:
(i) creating a data-based model as a forecasting tool according to Claim 1,
(ii) defining a target profile for the screw extruders and/or the extrusion process,
(iii) identifying those combinations of values for the screw extruders that satisfy the defined target profile and/or come closest to the target profile,
(iv) outputting and/or storing the combinations of values determined in step (iii),
(v) creating screw extruders on the basis of the combinations of values determined in step (iii) .

5. Forecasting tool for screw extruders and/or extrusion processes generated by the method according to Claim 1.

6. Computer system for carrying out a method according to one of Claims 1 to 4.

7. Computer program product with program coding means for carrying out methods according to one of Claims 1 to 4 on a computer.

## Revendications

1. Procédé mis en oeuvre sur ordinateur pour créer un outil de prévision pour extrudeuse à vis et/ou pour processus d'extrusion, comprenant au moins les étapes consistant à :
(a) établir un espace des paramètres, dans lequel les paramètres nécessaires à la simulation de processus d'extrusion sont requis et comprennent trois ensembles de paramètres : des paramètres destinés à décrire la géométrie des extrudeuses à vis, des paramètres destinés à décrire le matériau extrudé et des paramètres de processus,
(b) sélectionner des combinaisons de valeurs représentatives dans l'espace des paramètres,
(c) calculer des critères de résultats pour les combinaisons de valeurs sélectionnées à l'aide de calculs de simulation,
(d) créer un modèle basé sur les données à partir des combinaisons de valeurs sélectionnées et des critères de résultats calculés,
(e) répéter une ou plusieurs des étapes (a) à (d) jusqu'à ce que les critères de résultats puissent être calculés avec une précision suffisante à l'aide du modèle basé sur les données,
dans lequel les profils de section transversale des éléments à vis pour extrudeuses à vis sont décrits par des arcs de cercle et les arcs de cercle des profils fusionnent tangentiellement à leurs points de départ et d'arrivée, à condition qu'un pli soit décrit par un arc de cercle dont le rayon est égal à 0, et dans chaque cas un arc de cercle du profil de vis générateur correspond à un arc de cercle du profil de vis généré, et le profil de vis générateur est généré par les étapes suivantes :
(1) un nombre n d'arcs qui doivent former le profil de vis générateur est sélectionné, où n est un nombre entier supérieur ou égal à 1,
(2) un rayon extérieur ra est sélectionné, où ra peut prendre une valeur supérieure à 0 et inférieure ou égale à la distance de l'axe a,
(3) un rayon intérieur ri est sélectionné, où ri peut prendre une valeur supérieure ou égale à 0 et inférieure ou égale à ra,
(4) n arcs de cercle sont disposés dans le sens des aiguilles d'une montre ou dans le sens contraire des aiguilles d'une montre autour de l'axe de rotation du profil de vis générateur, conformément aux règles de disposition suivantes :
∘ les tailles de n-1 arcs sont déterminées par les angles sélectionnables α_1, α_2,..., α_(n-1) et par les rayons sélectionnables r_1, r_2,..., r_(n-1), où les angles en radians sont supérieurs ou égaux à 0 et inférieurs ou égaux à 2π et les rayons sont supérieurs ou égaux à 0 et inférieurs ou égaux à la distance de l'axe a,
∘ l'angle α_n d'un dernier arc de cercle résulte du fait que la somme des n angles des n arcs de cercle en radians est égale à 2π,
∘ le rayon r_n d'un dernier arc de cercle résulte du fait que ce dernier arc de cercle ferme le profil,
∘ tous les arcs de cercle fusionnent tangentiellement de manière à obtenir un profil convexe,
∘ un arc de cercle dont le rayon est égal à 0 est de préférence traité comme étant un arc de cercle dont le rayon est égal à eps, où eps est un nombre réel positif très petit tendant vers 0,
∘ chacun des arcs de cercle se situe à l'intérieur ou sur les limites d'un anneau circulaire présentant le rayon extérieur ra et le rayon intérieur ri, dont le centre se situe sur le point de pivot du profil de vis générateur,
∘ au moins l'un des arcs de cercle touche le rayon extérieur ra,
∘ au moins l'un des arcs de cercle touche le rayon intérieur ri.

2. Procédé de prévision du comportement d'extrudeuses à vis pendant l'extrusion d'un produit extrudé, comprenant au moins les étapes consistant à:
(I) créer un modèle basé sur des données en tant qu'outil de prévision selon la revendication 1,
(II) saisir des valeurs caractéristiques de l'extrudeuse à vis, du processus d'extrusion et du matériau dans le modèle basé sur les données,
(III) calculer des critères de résultats à l'aide du modèle basé sur les données,
(IV) fournir en sortie un résultat.

3. Procédé d'optimisation de la géométrie d'extrudeuses à vis et/ou de processus d'extrusion, comprenant au moins les étapes consistant à:
(A) créer un modèle basé sur des données en tant qu'outil de prévision selon la revendication 1,
(B) déterminer un profil cible pour l'extrudeuse à vis et/ou le processus d'extrusion,
(C) identifier les combinaisons de valeurs qui correspondent au profil cible spécifié et/ou qui se rapprochent le plus du profil cible,
(D) fournir en sortie les combinaisons de valeurs déterminées à l'étape (C).

4. Procédé de fabrication d'extrudeuses à vis, comprenant au moins les étapes consistant à :
(i) créer un modèle basé sur des données en tant qu'outil de prévision selon la revendication 1,
(ii) déterminer un profil cible pour l'extrudeuse à vis et/ou le processus d'extrusion,
(iii) identifier les combinaisons de valeurs des extrudeuses à vis qui correspondent au profil cible spécifié et/ou sont les plus proches du profil cible,
(iv) fournir en sortie et/ou enregistrer les combinaisons de valeurs déterminées à l'étape (iii),
(v) créer des extrudeuses à vis à partir des combinaisons de valeurs déterminées à l'étape (iii).

5. Outil de prévision pour extrudeuses à vis et/ou pour processus d'extrusion produit par le procédé selon la revendication 1.

6. Système informatique destiné à mettre en oeuvre un procédé selon l'une quelconque des revendications 1 à 4.

7. Produit de programme d'ordinateur comportant des moyens de codage de programme destinés à mettre en oeuvre un procédé selon l'une quelconque des revendications 1 à 4 sur un ordinateur.
